# EUROPEAN PATENT SPECIFICATION

(11) **EP 4 139 771 B1**
(45) Date of publication and mention of the grant of the patent: **08.05.2024**
(21) Application number: 22702774.5
(22) Date of filing: 26.01.2022
(51) Int. Cl.: G06F 1/16, G06F 3/02, G06F 3/023, G06F 3/04883, G06F 3/04886, G06F 3/01, G06F 3/03

(54) **APPARATUS AND METHOD FOR ENTERING LOGOGRAMS INTO AN ELECTRONIC DEVICE**
VORRICHTUNG UND VERFAHREN ZUR EINGABE VON LOGOGRAMMEN IN EIN ELEKTRONISCHES GERÄT
APPAREIL ET PROCÉDÉ POUR ENTRER DES LOGOGRAMMES DANS UN DISPOSITIF ÉLECTRONIQUE

(30) Priority: 27.01.2021 GB 202101124
(43) Date of publication of application: 01.03.2023
(73) Proprietor: Loh, Han Ning, London N1 7SL (GB)
(72) Inventor: Loh, Han Ning, London N1 7SL (GB)
(74) Representative: Barker Brettell LLP
(86) International application number: PCT/GB2022/050201
(87) International publication number: WO 2022/162356

(56) References cited:
- CA-A1- 2 335 607
- US-A1- 2010 302 016
- US-A1- 2012 110 518
- US-A1- 2012 119 997
- US-A1- 2017 131 890

## Description

This invention relates to an apparatus and method for entering logograms of a logographic writing system into an electronic device, in particular but not exclusively for entering Chinese logograms into a computer or smartphone.

Logograms are written characters that represent a word or morpheme. Chinese is a widely used example of language which is written as a sequence of logograms when written down. Logograms differ from alphabetical characters in that each alphabetical character does not generally represent a word by itself. Rather than a different sequence of alphabetical characters representing a word, a single logogram will be used.

Most logographic character sets can be written using a relatively small set of fundamental strokes or stroke types. By placing the strokes in different places within a character, many different overall shapes can be constructed. Each of the shapes made up of fundamental strokes or stroke types is a logogram.

The stroke types in a character set often fall within a finite set of stroke types. If a user can write every fundamental stroke, then by writing them in a correct location relative to other fundamental strokes they can write out any of the logographic characters of the character set. Whilst there may be thousands of characters in a set there are far fewer fundamental strokes. These include dots, horizontal and vertical lines and so on.

Because each word is written as a single unique character from a character set, a logographic writing system will include many hundreds or thousands of unique logograms. This presents a unique problem when there is a need to enter those characters on an electronic device. Whereas an alphabet-based writing system can be implemented using one key for each character, making entry trivial, it becomes impractical to have one key for each logogram character of a large character set. In Chinese, for example, there would need to be several thousand keys. A computer device may hold a Chinese character set of many thousands of characters, each of which may be assigned to a unique code in an encoding system recognised across multiple platforms. One of the most widely used encoding systems is the Unicode system, where the assigned Unicode tells the computer which character is to be displayed on a screen leaving the computer to render the appropriate logogram taking account of the screen resolution and so on. The Unicode provides a common encoding system for the characters that allows the writing to be reproduced across different computer devices that may use different software. Another universal encoding system is the CJK (Chinese Japanese Korean) encoding system.

Many attempts to provide ways to write in a language such as Chinese on a computer device have been made over the years. Each has its own disadvantages. There are several methods that are in use, with phonetic input being commonly used. This method relies on a user inputting 'pinyin', the phonetic Romanisation of characters, and selecting the correct character from a list of options. For example, to get ' 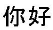 ', you would type `Ni Hao' and select from a list of possible characters with that sound. This is inefficient because the Chinese language has a limited phonetic inventory with a significant number of homophonous syllables. Many fluent Chinese speakers are forgetting how to write, because pinyin-based input enables them to enter characters without knowing how to write them.

Aside from pinyin-based entry systems, other mainstream Chinese text input systems include Cangjie (keyboard input, using the 'root' logographs of a character) and Wubi (keyboard input, shape-based) and handwriting recognition (the slowest). Pinyin is the easiest to learn, but is inefficient and inaccurate. Cangjie is slightly more accurate and Wubi is the most efficient and accurate, but has the steepest learning curve. Both Cangjie and Wubi require additional knowledge about the system to use so that users presented with either keyboards will not intuitively know how to use them.

More recently, voice recognition has been proposed but this is not suitable for all people or situations. Voice dictation is difficult on the move in a noisy environment and very slow when entering uncommon words.

None of these systems help a user to learn or maintain competency of the orthographic knowledge of physically writing logograms and this is becoming a concern for many scholars who fear the ability to write by hand may be lost to a new generation of computer users.

US2010302016 A1 describes a method of entering data to an electronic device using a modified touch-pad. The touch-pad is modified to include the addition of surface features, which provide distinguishable tactile feedback to the user allowing improved spatial resolution of the positioning of an object onto the surface of the touch-pad. In this manner the touch-pad allows the user to select from multiple positions across the surface of the touch-pad, the outcomes of each position being optionally different.

US2017131890 A1 describes a method and system for inputting Simplified and Traditional Chinese, Japanese, and Korean (CJK) characters into a touchscreen-enabled device. The touchscreen-enabled device receives a plurality of finger touch events. Each of the plurality of finger touch events is a CJK text input stroke associated with a corner of the touchscreen-enabled device. A finger touch movement direction on the touchscreen-enabled device is determined for each of the plurality of finger touch events. In response to determining the finger touch movement direction, the finger touch movement direction associated with each of the plurality of finger touch events is converted to a numeric index value. The corner that is activated by each of the plurality of finger touch events is determined and associated to the numeric index value.

US2012110518 A1 describes a user device which includes a touch input and a keypad input. The user device is configured to operate in a gesture capture mode as well as a navigation mode. In the navigation mode, the user interfaces with the touch input to move a cursor or similar selection tool within the user output. In the gesture capture mode, the user interfaces with the touch input to provide gesture data that is translated into key code output having a similar or identical format to outputs of the keypad.

According to a first aspect the invention, there is provided a text entry apparatus for entering characters of a logographic character set on an electronic device, as defined in claim 1. Optional and/or preferable features are set out in the dependent claims.

By part of a character, we mean less than all the strokes that form a complete logographic character, although it is within the scope of the invention to also generate a complete logographic character from one gesture or a chord of gestures made at the same time.

The method may further comprise, on a user entering an end command, mapping the inputted as set of fundamental strokes to a logographic character and outputting a corresponding code of a character encoding system.

The interface may assign a different value to an intermediate signal for one or more of the following types of gesture:
An up down gesture across a contact region;
A side-to-side gesture along a contact region orthogonal to the up down direction;
A diagonal gesture that crosses a contact region;
The pressure applied to the contact region;
The duration of the contact and
The speed of movement of the contact across or along the contact region.

The system of the invention enables a user to enter a sequence of fundamental strokes that make up a logogram by contacting an appropriate contact region of an interface using a specific gesture type. This is similar to the way a user can use a stationary pressing gesture on an appropriate sequence of keys on a keyboard to enter a sequence of alphabetical characters to type a word. Unlike a keyboard where the keys are pressed, the contact regions can be contacted using a variety of different gesture types as can be done when playing a stringed instrument, allowing one contact region to be used in multiple ways.

The interface in one preferred arrangement may include multiple contact regions grouped into rows of contact regions with each row providing an elongate "virtual string" that the user can interact with in a much greater number of ways compared with the pressing of a limited set of keys on a keyboard. This enables a far higher number of unique inputs to be made by a user in a given form factor as will become apparent. The up and down gestures can be considered analogous to strumming a string, the side to side analogous to sliding along a string and so on.

Instead of rows, the contact regions may be arranged to form columns. For expediency, any reference to rows in the remainder of this text should be read as also being a reference to an arrangement with columns, the two being interchangeable and in any case dependent on how the user interface is oriented relative to a user.

The contact regions in each row of contact regions may be elongate. Each row may comprise a single elongate contact region that reaches from one end of the row to the other. Alternatively, each row may comprise two or more contact regions that abut adjacent regions in the row so that the whole set of contact regions form a continuous elongate element that is responsive to a finger being dragged across the element at any position along its length. This continuous element may have a length much greater than its thickness to define a virtual string akin to the string of a musical instrument. The long axis of each region may be aligned with the long axis of the respective row.

In other arrangements, each row may contain at least two contact regions that overlap one another, or in which one is wholly contained within the bounds of the other.

The rows of contact regions may be arranged in parallel, with one end of each row aligned with one end of all the other rows along a direction orthogonal to the long axis of the rows.

Each row may have the same length as the other rows along a long axis of the row and so the second ends of the rows may also be lined up along a direction orthogonal to the long axis of the other rows.

There may be at least 2 rows, preferably four or five rows, but more or fewer may be provided. The parallel rows will give the interface an appearance like a stringed musical instrument.

Each row may comprise at least two contact regions, or at least 3, or up to 8 or 9 or perhaps more than 10 contact regions. These may be contiguous although spaces may be provided between adjacent contact regions in a row or between adjacent rows.

The rows may be located on an upper face of a base portion of the input device. This most preferably comprises a generally rectangular base portion having a first dimension in a direction parallel to the long axis of the rows sized to allow the fingers and thumbs of both hands of a user to be placed side by side along an elongate element. Of course, different people will have different sized hands but these results in a preferred width of between 20cm and 30cm. This allows the user to contact a region of a string using any of their fingers or thumbs or to contact up to 10 regions at once using their fingers and thumbs of two hands, or more if one finger or thumb contacts two adjacent regions of an elongate element at one time.

The spacing between the rows, when in parallel, may be as little as 2mm or as much as 10mm or higher. The spacing should allow a user to contact one of the regions in a row independent of the others, but also to rapidly generate a temporal sequence of intermediate signals by dragging across multiple rows in one gesture.

The spacing may be greater than the thickness of the regions of each row.

The contact regions of each row may take many forms. For example, in one arrangement each contact region may comprise, or be aligned with, a protrusion that projects from or is supported above the upper surface of the base portion such that on drawing a finger across a region of the element the finger will pluck at the region. Being raised allows the user to easily feel the contact with the region.

The protrusion may comprise a slender elongate rib, the long axis of the rib aligned with the long axis of each row of sensing regions. It may have a height above the upper surface of the base of between 1mm and 3mm, but other heights are possible.

The protrusion may be rigid or may be flexible, or may be hinged relative to the base portion.

As an alternative to a plurality of raised protrusions, each of the contact regions may be flush with an upper surface of the base portion such as on a touchscreen. Each element may be identifiable on the base portion by a marking that has a different colour or tone to the surrounding base or through the use of a material that feels different, so the user knows where to place a gesture. Other markings could be provided, such as text, or arrows similar to that of a keyboard with letters and symbols printed on it.

In a further alternative, each contact region may comprise, or be aligned with, a groove provided in the surface of the base portion. In this case, the user will feel the edges of the groove as they brush their finger over the region. The groove may be aligned with the long axis of the row of regions.

The tip of a protrusion, or base of a groove, may be coloured to make it visible from the base portion. Each contact region may be illuminated using appropriate backlighting.

The markings or protrusions or grooves may run along a centreline of each row of contact regions and as such provide an indication to a user of where those regions are located. They may represent virtual "strings" that run across the centre of the contact regions.

The markings, or protrusions, may be elongate and extend along the full length of each row of contact regions. The width of the elongate marking my correspond with the boundaries of the contact regions, so that contact anywhere on the marking or protrusion will be detected as contact of a contact region. Alternatively, the marking or protrusions may be slimmer and could, for instance, indicate a central axis of each elongate row of contact regions.

The contact regions themselves may be invisible to the user and separate from the markings or protrusions.

The text entry apparatus may comprise a touch sensitive display, and the rows of contact regions may each extend substantially from one side of the display to the other.

To detect when a user drags a finger over a contact region each region must be capable of detecting the time at which contact is made and provide a trigger or output for generating an intermediate signal that is associated with the contact region.

In a most preferred arrangement, each contact region comprise one or more touch sensitive regions and as such may include a sensor which detects the contact of a finger and the motion of the finger. Several suitable technologies for such touch sensitive regions are known in the art, and they are widely used to form touch sensitive displays for electronic devices including mobile phones, tablets, and laptop computers.

The touch sensitive regions may comprise regions of a touch sensitive display, for example a touchscreen of a smartphone or tablet or monitor. This is a convenient arrangement as the display can be used to graphically illustrate the locations of the rows in a stylised form as well as being able to detect gestures made by a user.

Each of the contact regions may comprise a single touch sensitive region which can output an intermediate signal encoding both contact and the type of contact, such as the direction and duration of movement, as well as pressure when a user swipes their finger over the contact region.

Alternatively, a contact region may comprise a set of sub-regions that are each touch sensitive, each sub-region outputting a data signal, the intermediate signal being generated by processing the data signals detected from the signals that form the set.

Many forms of processing are possible within the interface for generating the intermediate signals. In one preferred method that can be implemented where a touch sensitive surface is provided, such as a touchscreen, a vector analysis of gestures may be made. In this case the following steps may be performed by the user interface:
1. The swipe of the touch sensitive surface is recorded as a vector, which may then be normalised so the vector has a magnitude of 1. Each swipe is processed individually with the start of one swipe and start of the next being determined whenever there is either a time gap between swipes above a threshold or a jump in location of the detected contact.
2. The dot product is used to determine which out of the plurality of swipe 'directions' the vector is closest to (up, down, left, right, diagonal up left, diagonal up right, diagonal down left, diagonal down right). Essentially the vector is grouped into one of the 8 categories.
3. The identity of the contact region and the direction of the swipe give the identity of the stroke.

The subsets of touch sensitive regions that make up a contact region may be configured as regular grid of touch sensitive sub-regions, for example an N*N grid where N is greater than 1 or an N*M grid where N and M may be the same or different and each greater than 1. This arrangement makes a vector analysis quite simple to perform by a person skilled in the art of touchscreen design and is used commonly in the likes of games engines for smartphone applications.

The processing device may generate each intermediate signal from a combination of the outputs of each sub-region in the grid taking account of the order in which the outputs are generated. For instance, the order will be opposed for gestures up or down the grid of sub-regions.

Where each row comprises two overlapping contact regions that have different sizes, a first contact region may comprise a first sub-set of touch sensitive regions that define a contact region that is touch sensitive over a wide region each side of a central axis, and the second contact region may comprise a second sub-set of touch sensitive regions that define a contact regions that is touch sensitive over a narrower region each side of a central axis, the central axes of both first and second contact regions being the same or substantially the same so that the narrow rows fit within the wider rows.

The arrangement of wide and narrow rows will result in a relatively small or no dead space between adjacent wide rows, and a larger dead space between the narrow rows. By dead space we mean an area which when contacted does not generate any signal that contributes to the generation of an intermediate signal.

For each row, the wide and narrow contact regions may be aligned so that start and end at the same locations along the central axis of the row.

Where each row is made up of narrow and wide rows that wholly overlap, the steps 1 to 3 set out above may be expanded into the following set of steps:
1. The swipe is recorded as a vector, then normalised so the vector has a magnitude of 1. (Each swipe is processed individually). Because the two contact regions overlap, there will be two vectors produced in most cases, except the edge case where a "left" or "right" gesture is made that is far enough from the centre axis of the row to miss the narrow contact region but fall within the wider one. In this case, the wider one will generate a vector and the narrow contact region nothing.
2. The dot product is used to determine which out of the multiple 'directions' the vector is closest to (up, down, left, right, diagonal up left, diagonal up right, diagonal down left, diagonal down right). Essentially the vector is grouped into one of the multiple categories.
3. If the vector is categorised as either 'left' or 'right', the vector from the wider contact region is used as the basis for the intermediate signal.
4. Otherwise, the vector of the narrower contact region is used to determine the intermediate signal.
5. The identity of the contact region and the direction of the swipe give the identity of the stroke.

Providing rows defining wider and narrow forms of contact regions is helpful in allowing the user greater freedom of where to place the gesture relative to the strings. Ideally the user will gesture exactly along, or across, an indicated string. In practice they may miss the string especially when making horizontal gestures parallel to the rows. If contact regions are used which are narrow with wide spaces between them, the gesture may miss a narrow contact region entirely and no vector will be generated. By using the wider regions, the processing circuit will identify a vector. It will only be in one of the wider regions, as the user will be on or close to only one string. On the other hand, if the user is making a gesture across a string it could easily extend across both wide regions resulting in each one generating a vector and giving an ambiguous output or being misread as simultaneous gestures across two strings. When using the narrow contact region, only one vector and contact region will be identified, as the start or end will be in the dead zone between the narrow regions.

Whether the contact regions are, or are aligned with, raised, flush or recessed regions, or a combination of these types of regions, the user input device may include an array of actuators that provide haptic feedback to the user so that the user can feel when they drag their fingers over a region of an elongate element. The user input device may therefore generate vibrations of the sensing regions as they are contacted. In an alternative or additionally the apparatus may include a loudspeaker and the processor may feed a signal to the loudspeaker that generates a suitable audible confirmation of which region has been contacted. In a further alternative, visual feedback may be provided.

In one arrangement, the input device may include a touch screen and the rows of sensing regions may be represented by markings on the touchscreen. The markings may be permanent, overlaid onto the touchscreen or displayed by the touchscreen, or may be temporary. For example, the markings may be rendered on a touch screen only when needed.

In another arrangement the apparatus comprises a smartphone or tablet or other device with a touchscreen where regions of the touchscreen define the contact regions. A typical smartphone touchscreen today could be used because it detects movement as well as contact. The technology also exists for a user to contact multiple regions at the same time on a touchscreen, allowing multiple intermediate signals to be generated simultaneously. As will be explained later this multiple touch capability can be used as part of the mapping of intermediate signals to fundamental strokes or groups of fundamental strokes (including radicals) forming a part of a logogram.

The rows may extend from one side of the touchscreen to the other, or almost from one side to the other. The touchscreen may extend from one side of the smartphone or tablet to the other. The touchscreen may occupy substantially the whole of a front face of the smartphone of tablet, perhaps with a relatively narrow bezel surrounding the touchscreen. This arrangement allows a user to hold the phone in both hands or one hand, and to make swipes using one thumb, both thumbs or one or more fingers anywhere along a row to input a fundamental stroke. This provides much greater versality than any keyboard type interface where a very small specific area of the smartphone must be contacted to make an input. It also enables both left- and right-handed users to be make inputs with the same degree of dexterity.

In a further alternative, a camera system may be provided which captures the motion of the fingers of a user over a row of contact regions, the camera determining when a region has been contacted by a user and causing an appropriate intermediate signal to be generated. The camera system may comprise at least one camera which has the contact regions within a field of view of the camera. Two cameras may be provided viewing the contact regions from different points of view.

In a still further arrangement, the interface may comprise a plurality of sensors attached to the hands, perhaps one or more sensors attached to each of the fingers and thumbs of a user which track the motion of the fingers and thumbs relative to a set of passive contact regions. In this case, the sensors will be configured to generate the intermediate signals as the user contacts a contact region. This interface may take the form of a glove or gloves.

In a yet further arrangement, the user interface may comprise actual strings held in tension over a base portion, each string defining a contact region, the interface including a sensing device that detects different types of gestures made by a user form the resulting frequency and amplitude of vibrations of each string.

The sensing device may comprise a pickup comprising at least one coil winding associated with each string. The design and construction of a suitable pick up is within the general knowledge of any technician familiar with an electronic stringed instrument.

As an alternative to a pickup, the sensing device may comprise a microphone which may generate a signal in response to sounds emitted by the strings.

The interface may be arranged to generate an intermediate signal that encodes at least one property of the movement across a contact region made by the finger. The intermediate signal may uniquely identify the contact region and the property of the movement. It is, however, within the scope of this invention for two or more regions to output identical intermediate signals, for instance where each row has two overlapping regions, one wide and one narrow. This is analogous to the way the same note can be played on different strings of a single musical instrument, giving a user multiple ways to enter the same fundamental stroke or group of strokes. The intermediate signal may therefore identify the row in which a contact region is located and the property of the movement made by a user contacting the region.

The encoded property may comprise the direction the finger is moved orthogonally across the contact element. For example, with the user input device placed in front of a user and the rows of contact elements extending horizontally, the user may drag their finger or thumb across the element away from their body which can be encoded as an upward stroke. On the other hand, with the input device in the same orientation the user may drag their finger or thumb across the element in a direction towards their body which may be encoded as a downward stroke.

The property may also comprise the direction the finger is moved along the contact element in a direction aligned with the long axis of the row containing the contact region.

The property may also comprise the pressure applied by the finger to a contact region, so that a light pressure gesture will be encoded with a different value to a heavy pressure gesture. By pressure we mean how hard the user presses down on the region of the element during the gesture.

The property may also comprise the length of the gesture, by which we mean how long the finger or thumb or pointing device (stylus) spends from start to finish making a single gesture.

The property may also comprise the speed of the gesture, by which we mean how fast the user moves their finger over the elongate element.

The interface may for each contact region output an intermediate signal to the processing circuit having a respective one of many different values depending on the type of gesture made. For example, with the eight properties of direction (an up/down movement, a left/right movement, a diagonal up left/right movement, a diagonal down left/right movement), pressure (high/low), length (long/short) and speed (fast/slow) each taking a binary value, each gesture may generate up to 64 different output values for each region of an elongate element. If each row of contact elements is made up of 10 regions this gives a total of 640 possible output values for each row, and for 5 rows a total of 3200 possible output values.

The processing circuit may be configured to map a fundamental stroke to the property or combination of properties of each intermediate signal in the temporal sequence.

In addition, the processing circuit may be configured to map a character composition to each row of contact regions, or to specific contact regions of the user input device. In this way, the same fundamental stroke may be generated regardless of which contact region in a row the user contacts. Where the rows are presented on a screen of a mobile phone, for example, being able to interact anywhere along a row allows for the device to be used by both left and right-handed people in a simple manner as they can reach in from either edge of the screen.

Alternatively, the processing circuit may map a character composition to the property or combination of properties of each intermediate signal in the temporal sequence and to map a fundamental stroke to each row of contact regions, or to specific contact regions of the user input device.

In a different arrangement, the processing circuit may map a group of fundamental strokes to a combination of simultaneous intermediate signals in a sequence. Simultaneous intermediate signals would be generated if a user made two or more gestures simultaneously or substantially simultaneously. Contact with one contact region may cause the interface to generate multiple signals simultaneously, or they may be generated from contacts with multiple contact regions. Such a chord of intermediate signals could be mapped to a shortcut gesture encoding a character composition which may be entered by a user prior to making individual or simultaneous gestures representing a single fundamental stroke or group of fundamental strokes.

The user input device may be configured such that a user contacting a contact region will generate an intermediate signal that identifies the region, preferably uniquely, and one or more properties of the gesture that is used. The value of an intermediate signal in a temporal sequence of intermediate values may comprise a string of binary digits.

For instance, each contact region may be assigned a unique four-digit code which the interface includes as the first part of an intermediate signal when a contact is made with the string. A first contact region may be assigned the code 0001, a second 0010, a third 0011 and so on. When a contact is made with the first contact region, an intermediate signal in the form "ID/gesture property 1/gesture property 2/gesture property 3/gesture property 4/../gesture property N" may be generated. In this example the intermediate signal will begin with 0001 as the ID, and may be followed by four binary digits to indicate that the gesture was upwards (with 1 denoting up and 0 down) and with a high pressure (the final 1 for high and 0 for low). A temporal sequence will comprise a sequence of these intermediate values, e.g., a sequence of binary data. In this encoding scheme, four binary digits allows for four of the possible five gesture properties to be encoded. If all five are to be encoded, or if more gesture properties are required, more binary digits can be used.

In one convenient arrangement, the apparatus may be configured such that stroke types or fundamental strokes are grouped into sets, one set for each row, with a specific fundamental stroke from each set being generated by the user making a gesture that contacts any of the contact regions in a row. Different gestures on a given contact region may generate different associated fundamental strokes. In summary, with this mapping the identity of the row of the contact region is mapped to a set of fundamental strokes and the types of gesture are mapped to fundamental strokes within that set.

In an alternative, the identity of the contact region within its respective row can be mapped to a further subgroup of strokes within the set if necessary.

In an alternative, the apparatus may be configured such that a fundamental stroke is assigned to a unique property or combination of the different gestures used when a user contacts a contact region, and with the identity of the contact region that is contacted encoding the composition type of the character. In summary, with this mapping the contact region's identity is independent of stroke type. Contact region identity is mapped to composition type.

The processing circuit may be configured to generate a unique group of fundamental strokes corresponding to any chords present in the temporal sequence of intermediate signals, a chord comprising two or more intermediate signals that coincide temporally. This will be generated when a user contacts two or more regions simultaneously.

Whilst the invention primarily enables the entry of logograms via one or a group of fundamental strokes each time a user brushes a finger or thumb or pointing device across a contact region, the processor may also be configured to output a whole logogram or a radical made up of a group of fundamental strokes and forming part of a logogram in response to a single chord of intermediate signals or a sequence of chords. This may be convenient for entering commonly used characters.

The apparatus may include a look up table stored in a memory which maps these chords of gestures to groups of strokes.

The apparatus may include a look up table stored in a memory that maps single gestures or groups of gestures to each contact region. The processing circuit may access the table to generate the sequence of strokes from the intermediate signal sequence.

The apparatus may include a look up table stored in a memory that map strokes in a sequence to radicals or complete logograms.

The apparatus may include a look up table stored in a memory that maps complete logographic characters to a code of an encoding system such as Unicode.

The processing circuit may be configured to use the stored look up tables to generate the required sequence of strokes and complete logographic characters and optionally to generate the associated code from the encoding system.

The apparatus may include a display which is configured to render a visual representation of each fundamental stroke in a temporal sequence to build up a logogram.

The display may comprise a display of a mobile phone, or a laptop computer, or a tablet device, or a personal computer.

Where the contact regions are rendered on a touchscreen, a different region of that touchscreen may be used to render the fundamental strokes.

The processing circuit may be configured to autocomplete a character of the character set once a corresponding set of fundamental strokes has been generated.

To perform an autocomplete, the processing circuit may be configured to continuously search and retrieve characters that match a sequence of fundamental strokes and optionally character composition from a database. Each identified character may be displayed on a display by the processor and once the correct character is displayed, the user may input an end signal that is received by the processing circuit to 'finish' the character and move on to the next character.

Once the processing circuit has identified a complete logographic character, and optically once that has been confirmed as correct by a user, the processing circuit may be configured to retrieve from a memory the code of a character encoding system such as Unicode or CJK system or other system for a logogram corresponding to the input sequence of fundamental strokes.

The single fundamental stroke or group of fundamental strokes may comprise strokes that form a complete Chinese logographic character. In an alternative the characters may comprise strokes that form a Korean, or Japanese complete logographic character. The invention in some arrangements is not to be limited to these specific languages but can be applied to any logographic writing system.

The apparatus may store a sequence of complete logographic character encodings generated in response to a sequence of gestures on the contact regions in an electronic memory, for later rendering on a display as written text.

The apparatus may include a display and may be arranged to display each logogram in the sequence on a display in real time as the sequence of strokes is made.

The user entry device, processing circuit and the display may be combined as a single unit, for example in the form of smartphone or tablet. This will require the display to be a touch sensitive display or to have a separate display and user input device.

The processor may be distal from the user input device, for example the processor may form part of the processing circuit of a personal computer and the user input device may transmit the intermediate signals to the remote processor through a wired or a wireless connection as a replacement or supplemental to a standard QWERTY keyboard or mouse or touchpad.

In an alternative, the user input device and processor may be combined into one unit that does not include a display so that the one unit will output the single stroke or sequence of strokes for rendering on a remote display. For example, the contact regions may be physically combined with the processor as one unit. In this case a further processing circuit is required to map the fundamental strokes to written logograms, for instance embodied as a computer program running on a personal computer that receives the output sequence of fundamental strokes.

In a further arrangement, a processing circuit that generates logograms from the sequence of user contacts with the interface and the resulting sequences of fundamental strokes may be combined with the user input device as one unit, such that the output of the unit is a sequence of codes of a suitable encoding system such as CJK or Unicode. In this case, the interface of the unit may include a display that allows the user to track the fundamental strokes or groups of strokes and their position relative to other strokes as they are entered. Such a unit can feed a sequence of encoded characters directly to an electronic device such as a laptop or personal computer.

The unit may include a memory that stores the sequence of characters, but it is also within the scope of the invention to provide a unit that does not store the sequence in a memory but simply output the characters as they are generated in real time.

According to a second aspect of the invention, there is provided a method for entering a character of a logographic character set into an electronic device, as defined in claim 13. Optional and/or preferable features are set out in the dependent claims.

By part of a character, we mean less than all the strokes that form a complete logographic character, although it is within the scope of the invention to also generate a complete logographic from one gesture or a chord of gestures made at the same time.

The method may further comprise, on a user entering an end command, mapping the inputted as set of fundamental strokes to a logographic character and outputting a corresponding code of a character encoding system.

The method may additionally autocomplete characters once corresponding strokes have been entered.

The autocomplete (character retrieval) may continuously run until the user inputs a specific end signal through the interface.

However, appropriate logic or machine learning/AI could be provided that determines the correct character (e.g., at the end of a common phrase) automatically. In this case, the apparatus may send the end signal without user input.

According to a non-claimed aspect the invention, there is provided a computer program which comprises a set of instructions which when executed on a computer device causes the device to carry out the method of the second aspect of the invention.

By computing device, we may mean any device in the following non-exhaustive list: a personal computer, a laptop, a tablet, and a smartphone.

The program may be stored in an area of memory of the computing device.

The contact regions may be provided as regions of a touchscreen incorporated into the device. Most current smartphones already have touchscreens which can display the contact regions on the screen and detecting when and how a user contacts that region of the screen. The screen can also be used to display the characters that are entered.

There will now be described by way of example only several embodiments of the present invention with reference to and as illustrated in the accompanying drawings of which:
Figure 1 is a schematic of a complete text entry apparatus in accordance with an aspect of the invention;
Figure 2 is a plan view of a first arrangement of a user interface designed to give the overall look and feel of a string instrument;
Figure 3 is a plan view corresponding to Figure 2 showing how each of the elongate strings of the user interface defines a single contact region;
Figure 4a is a plan view of an alternative implementation of a user interface where virtual strings are formed using rows of discrete contact regions;
Figure 4b is a plan view of another alternative implementation of a user interface where the virtual strings are indicia and are separate from the contact regions so that each row consists of two contact regions that wholly overlap.
Figure 5 is a view in cross section of a user interface showing how contact regions are raised above a base;
Figure 6 is a view corresponding to Figure 5 showing how contact regions are formed as grooves in the upper surface of the base;
Figure 7a is an illustration of a set of fundamental strokes a-j that can be used to write out logographic characters of the Chinese language and other similar logographic languages;
Figure 7b is an illustration of an alternative set of fundamental strokes a-k that can be used to write out logographic characters of the Chinese language and other similar logographic languages;
Figure 8 shows how a logogram can be classified by different character composition types which guide where strokes are written in a character;
Figure 9a is an exemplary notation that is used in this document to identify different ways that a user may contact a contact region. I.e., different gestures;
Figure 9b is an illustration showing how each of multiple contact regions can be represented along with the gestures that can be used on each region;
Figure 10a is a second exemplary notation that may be used to identify different ways that a user may contact a region that includes recognition of diagonal gestures.
Figure 10b is an illustration showing how each of multiple contact regions can be represented along with the gestures that can be used on each region for the second exemplary notation in Figure 10a;
Figure 11 is an illustration of the grouping of the fundamental strokes in Figure 7a used to form Chinese characters into four groups with each group assigned to one of four rows or strings of input devices, the grouping forming the basis of a first exemplary mapping method of strokes to gestures;
Figure 12 is an illustration using the notation of Figure 9a of the total set of gestures a user can make to form the character "Han" in Chinese using the mapping of Figure 11,
Figure 13 is a representation of the first three of the fundamental strokes that a user will enter consecutively or simultaneously to form the left side of the character "Han" using the first mapping of Figure 11;
Figure 14 is a representation of the second three of the fundamental strokes that a user will enter consecutively or simultaneously to form the right side of the character "Han" using the first mapping of Figure 11;
Figure 15 is an illustration of a second alternative mapping of fundamental strokes to gestures and their locations on an interface where each stroke is assigned to a unique gesture regardless of which contact region is contacted, and in with the contact regions are then mapped to character compositions in Figure 8;
Figure 16 is an illustration using the notation of Figure 9a of the total set of gestures a user can make to form the character "Han" in Chinese using the mapping of Figure 15,
Figure 17 is a representation of the first three of the fundamental strokes that a user will enter consecutively or simultaneously to form the left side of the character "Han" using the mapping of Figure 15;
Figure 18 is a representation of the second three of the fundamental strokes that a user will enter consecutively or simultaneously to form the right side of the character "Han" using the mapping of Figure 15;

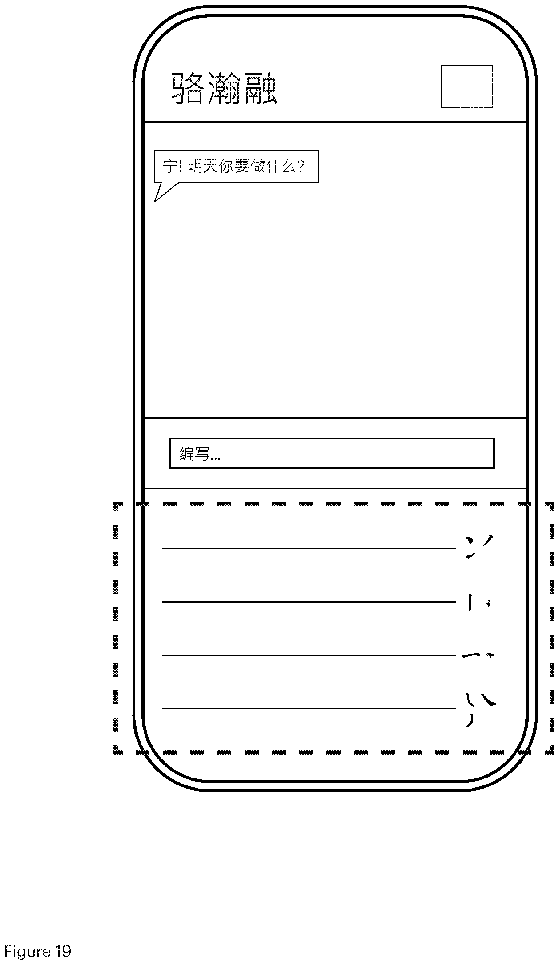

Figure 19 is a plan view of a smartphone device configured as an apparatus that falls within the scope of the first aspect of the invention;
Figure 20 is a schematic representation of an embodiment of an apparatus in accordance with a first aspect of the invention in which the interface has relatively little processing circuitry and some of the processing circuitry is provided by a connected electronic device;
Figure 21 is schematic of a user interface which has enhanced processing circuitry compared with the interface of Figure 20 that can output an encoded text such as Unicode;
Figure 22 is schematic showing the key function components of an all-in-one device such as a smartphone of the kind shown in Figure 19 configured to carry out a method of the second aspect of the invention;
Figure 23 is a flowchart showing the method used by the exemplary apparatus described in the preceding figures to generate logograms from the user gestures entered via the interface;
Figures 24(i) and (ii) show two still further alternative examples of a user interface; Figure 25a shows an implementation of the invention on a mobile phone device which displays two rows of contact regions;
Figure 25b is an illustration of another exemplary mapping method of strokes to gestures and contact regions displayed as 2 rows of strings;
Figure 26a shows the 2 sets of contact regions, which define narrow and wider rows and are triggered depending on the direction of the gesture;
Figure 26b shows an exemplary gesture interacting with the 2 sets of contact regions shown in Figure 26a;
Figures 27a, 27b and 27c is a table of exemplary `gesture shortcuts' that can be used to enter radicals, common stroke combinations or common use logograms, using the mapping in Figure 25b;
Figure 28 is a flowchart showing the method used by the exemplary apparatus described in Figures 25 to 29 to generate logograms from the user gestures entered via the interface;
Figures 29a to 29d illustrate an example of the mapping in Figures 7a and 25b, where two individual strokes are used to enter the character ' 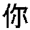 ' (Ni);
Figures 30a to 30f illustrate an example of the mapping in Figures 7b and 25b, where the user deletes one of the strokes in the input history, midway through entering a character and
Figures 31a to 31f illustrate an example of the mapping in Figures 7b and 25b, and the use of gesture shortcut 1b in Figure 27a.

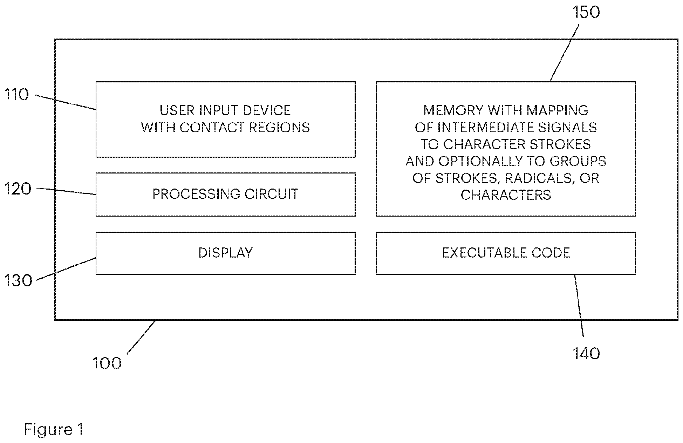

A complete exemplary system 100 for entering logographic characters in an electronic device is shown in Figure 1. In this example, the written characters form a Chinese character set, but this should not be seen to limit the invention. The system is based on the Gu Qin, an ancient Chinese stringed instrument, with strings that sits perpendicular to the player and is plucked by hand.

The system 100 comprises a user interface 110 which a user can physically interact with by making gestures, a processing circuit 120, and an optional display 130. The processing circuit 120 executes an executable code 140 stored in a memory 150. The memory also stores two sets of mappings- one mapping gestures and contact regions identities to fundamental strokes and/or groups of fundamental strokes and the other mapping a sequence of fundamental strokes and/or groups of fundamental strokes to a set of logographic characters.

The user interface 110 may replace a standard keyboard that would be used for alphabetical character entry to a personal computer. As will be explained later, the processing circuit 120 may use the processor and memory of a personal computer, or a dedicated processing circuit and memory may be provided for the purpose of doing the mapping and generating sequences.

The system 100 also includes a display 130, which in this example is a standard monitor that is connected to the personal computer. Other displays could be used and the display could be a dedicated display of a user interface.

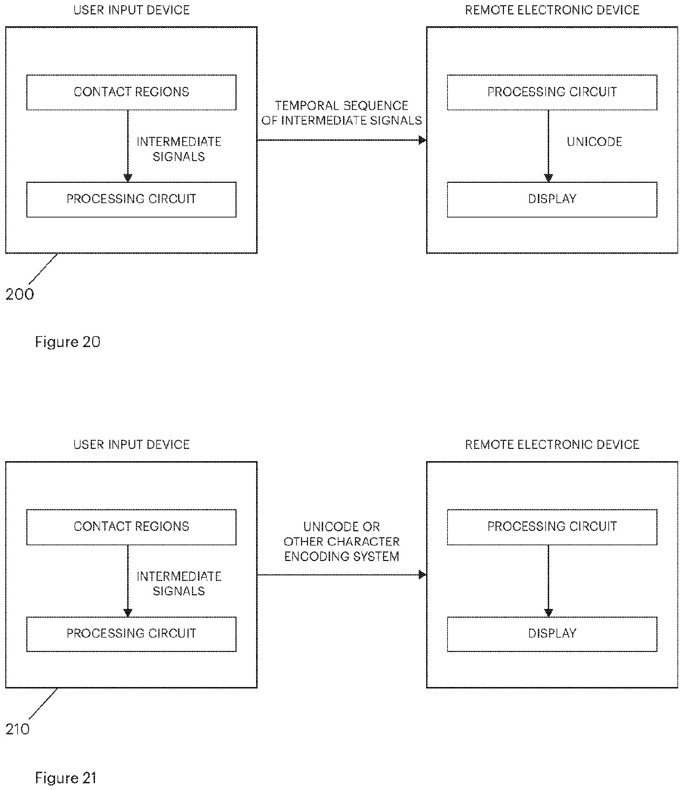

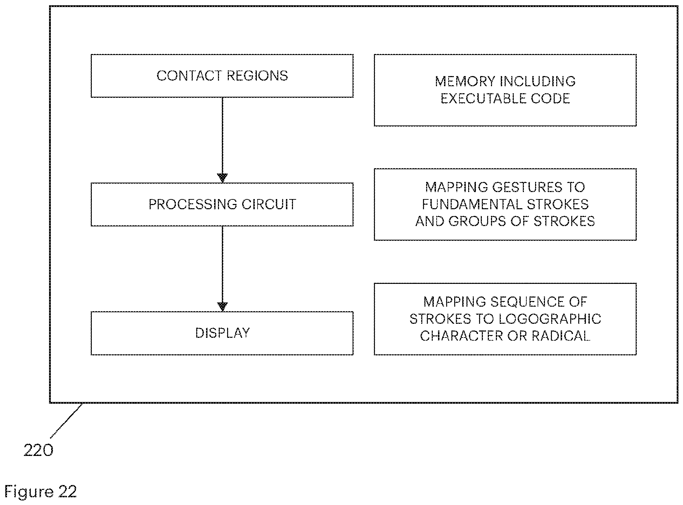

Figures 20 to 22 show different arrangements of these components which can be implemented. Figure 20 uses a simple interface 200 which does not perform any mapping and outputs a sequence of intermediate signals to a device into which the user wants to enter that text that includes the processing circuit. In the system of Figure 21, the interface 210 has more processing circuits and does the mapping of intermediate signals to fundamentals strokes and/or groups of strokes and their mapping to logographic characters. This is output as a sequence of encoded characters to another device into which the user wants to enter the text. Finally, Figure 22 shows how the whole system 220 can be implemented on a single device such as a smartphone.

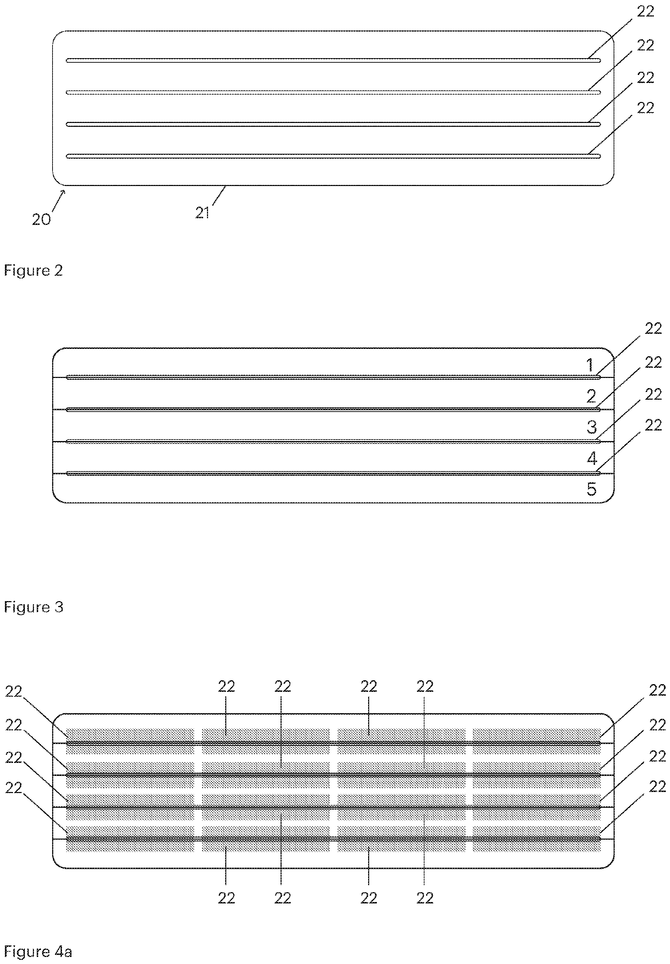

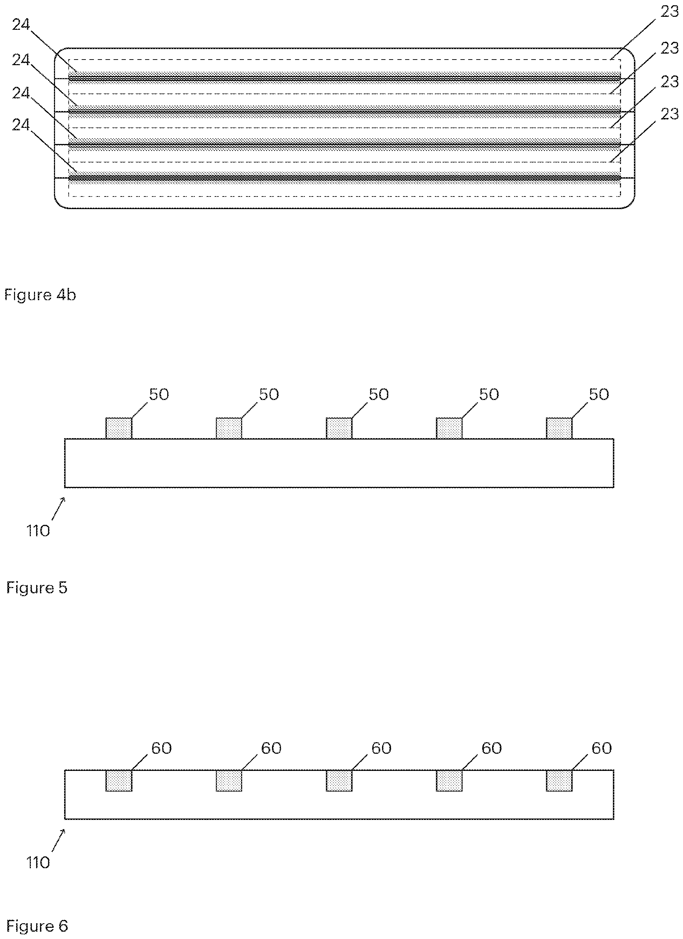

As shown in Figures 2 to 6, one arrangement of a generic user interface 110 comprises a relatively shallow base portion 20 having a rectangular and generally planar upper surface 21. It does not need to be rectangular of course but that is a convenient form factor for placing on a desk in front of a user. A plurality of contact regions 22 are defined on the upper surface that can be thought of as strings. These may take many different forms and there may be many different combinations of contact regions. Some exemplary formats are shown in Figures 2 to 6. In Figure 5 contact regions 50 are in the form of raised ridges, and in Figure 6 contact regions 60 comprise grooves.

The contact regions may be arranged to form rows so that each row extends generally continuously transversely across the upper surface of the base portion. Figure 3 shows how five parallel rows can be provided. Figure 3 shows how each row is formed from one single elongate contact region, and Figure 4a shows an alternative in which each row is formed from a plurality of contact regions. In the example of Figure 4a each row comprises four contact regions, to give 16 in total. Figure 4b shows another alternative where each row is formed from multiple overlapping contact regions, for example a wide region 23 and a narrow region 24, to give two sets of contact regions in total.

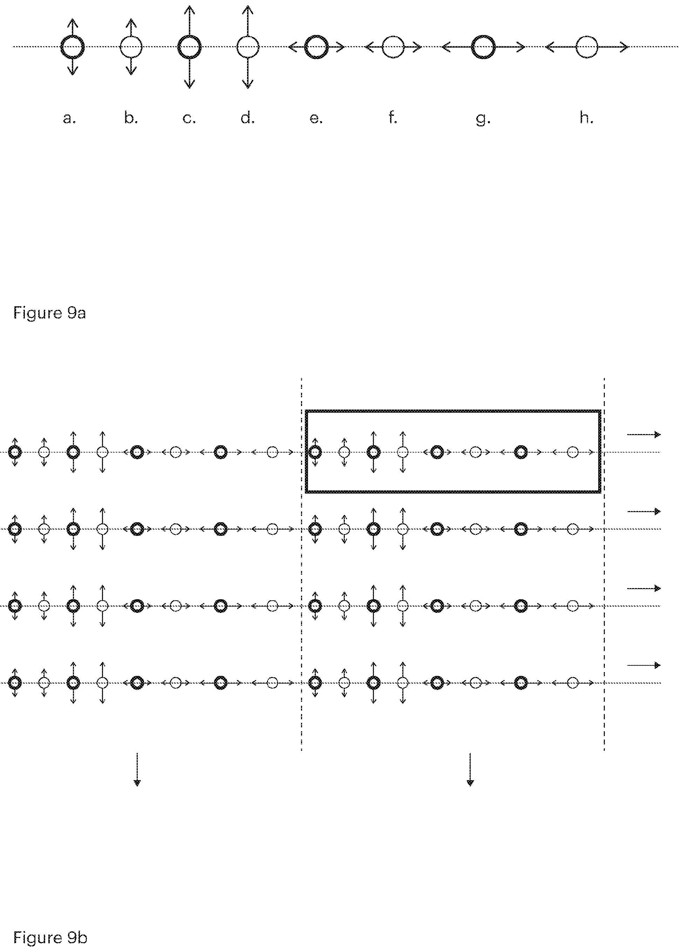

Each contact region is sensitive to contact and motion of a user's finger, a thumb, or a pointing device, or has an associated sensor that is sensitive to contact or can otherwise detect a contact (for instance a camera-based system) and produces an intermediate output signal. The output signal from each contact region comprises a string of binary digits, encoding optionally a unique ID for the contact region and /or a set of four properties of the gesture in the contact region made by a user. In this example these properties are the pressure (hard or light), an up/down component, a left/right component, and a short/long component. These can be encoded in four binary digits of a string and provide 32 possible output values for each region as shown in Figure 9a:
a. short, hard pressure, up, fast gesture
   short, hard pressure, up, slow gesture
   short, hard pressure, down, fast gesture
   short, hard pressure, down, slow gesture
b. short, light pressure, up, fast gesture
   short, light pressure, up, slow gesture
   short, light pressure, down, fast gesture
   short, light pressure, down, slow gesture
c. long, hard pressure, up, fast gesture
   long, hard pressure, up, slow gesture
   long, hard pressure, down, fast gesture
   long, hard pressure, down, slow gesture
d. long, light pressure, up, fast gesture
   long, light pressure, up, slow gesture
   long, light pressure, down, fast gesture
   long, light pressure, down, slow gesture
e. short, hard pressure, left, fast gesture
   short, hard pressure, left, slow gesture
   short, hard pressure, right, fast gesture
   short, hard pressure, right, slow gesture
f. short, light pressure, left, fast gesture
   short, light pressure, left, slow gesture
   short, light pressure, right, fast gesture
   short, light pressure, right, slow gesture
g. long, hard pressure, left, fast gesture
   long, hard pressure, left, slow gesture
   long, hard pressure, right, fast gesture
   long, hard pressure, right, slow gesture
h. long, light pressure, left, fast gesture
   long, light pressure, left, slow gesture
   long, light pressure, right, fast gesture
   long, light pressure, right, slow gesture

Figure 9a sets out a nomenclature for representing the different gestures of gesture types a to h, based on the type of gesture that is made.

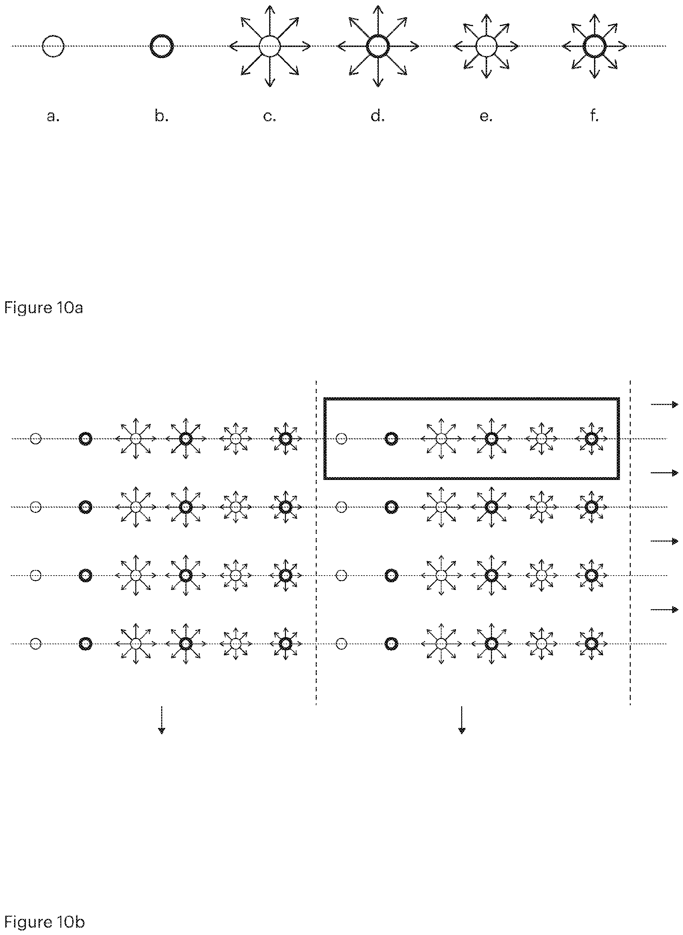

In an alternative, the system may also recognise diagonal gestures as inputs and may also recognise a tap of a string as an input. Figure 10a sets out a nomenclature for a system including these additional diagonal gestures. In this arrangement there are a total of 66 possible outputs:
a. Tap, light pressure
b. Tap, hard pressure
c. Long, light pressure, up, fast gesture
   Long, light pressure, up, slow gesture
   Long, light pressure, down, fast gesture
   Long, light pressure, down, slow gesture
   Long, light pressure, left, fast gesture
   Long, light pressure, left, slow gesture
   Long, light pressure, right, fast gesture
   Long, light pressure, right, slow gesture
   Long, light pressure, diagonal up right, fast gesture
   Long, light pressure, diagonal up right, slow gesture
   Long, light pressure, diagonal up left, fast gesture
   Long, light pressure, diagonal up left, slow gesture
   Long, light pressure, diagonal down right, fast gesture
   Long, light pressure, diagonal down right, slow gesture
   Long, light pressure, diagonal down left, fast gesture
   Long, light pressure, diagonal down left, slow gesture
d. Long, hard pressure, up, fast gesture
   Long, hard pressure, up, slow gesture
   Long, hard pressure, down, fast gesture
   Long, hard pressure, down, slow gesture
   Long, hard pressure, left, fast gesture
   Long, hard pressure, left, slow gesture
   Long, hard pressure, right, fast gesture
   Long, hard pressure, right, slow gesture
   Long, hard pressure, diagonal up right, fast gesture
   Long, hard pressure, diagonal up right, slow gesture
   Long, hard pressure, diagonal up left, fast gesture
   Long, hard pressure, diagonal up left, slow gesture
   Long, hard pressure, diagonal down right, fast gesture
   Long, hard pressure, diagonal down right, slow gesture
   Long, hard pressure, diagonal down left, fast gesture
   Long, hard pressure, diagonal down left, slow gesture
e. Short, light pressure, up, fast gesture
   Short, light pressure, up, slow gesture
   Short, light pressure, down, fast gesture
   Short, light pressure, down, slow gesture
   Short, light pressure, left, fast gesture
   Short, light pressure, left, slow gesture
   Short, light pressure, right, fast gesture
   Short, light pressure, right, slow gesture
   Short, light pressure, diagonal up right, fast gesture
   Short, light pressure, diagonal up right, slow gesture
   Short, light pressure, diagonal up left, fast gesture
   Short, light pressure, diagonal up left, slow gesture
   Short, light pressure, diagonal down right, fast gesture
   Short, light pressure, diagonal down right, slow gesture
   Short, light pressure, diagonal down left, fast gesture
   Short, light pressure, diagonal down left, slow gesture
f. Short, hard pressure, up, fast gesture
   Short, hard pressure, up, slow gesture
   Short, hard pressure, down, fast gesture
   Short, hard pressure, down, slow gesture
   Short, hard pressure, left, fast gesture
   Short, hard pressure, left, slow gesture
   Short, hard pressure, right, fast gesture
   Short, hard pressure, right, slow gesture
   Short, hard pressure, diagonal up right, fast gesture
   Short, hard pressure, diagonal up right, slow gesture
   Short, hard pressure, diagonal up left, fast gesture
   Short, hard pressure, diagonal up left, slow gesture
   Short, hard pressure, diagonal down right, fast gesture
   Short, hard pressure, diagonal down right, slow gesture
   Short, hard pressure, diagonal down left, fast gesture
   Short, hard pressure, diagonal down left, slow gesture

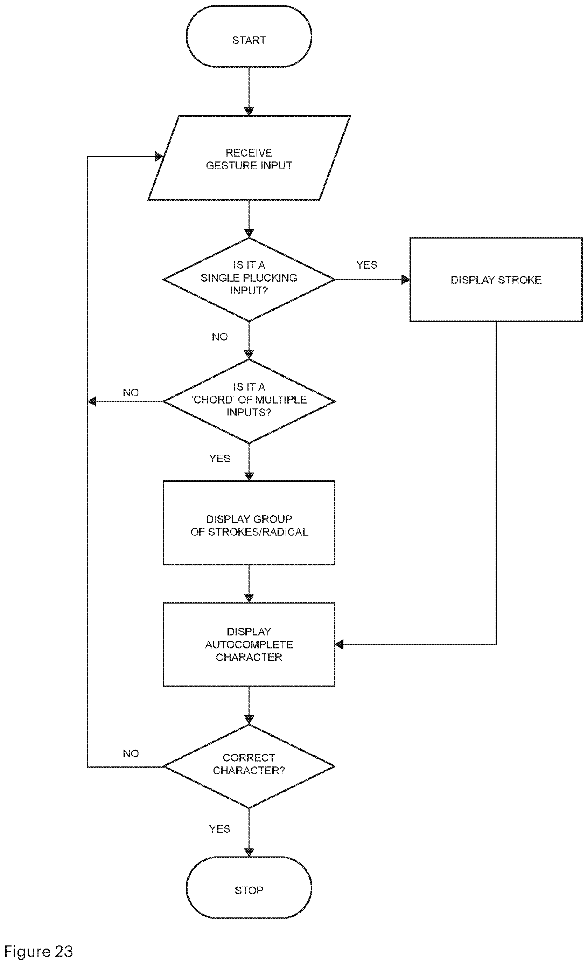

In use, as shown in Figure 23, a user can contact the regions in a sequence to generate a temporal sequence of intermediate signals from the regions. The processing circuit maps the string value of intermediate signals to fundamental strokes and/or groups of strokes. It first determines if there is one intermediate signal that has been input at a given time, and if so generates one associated fundamental stroke using a mapping. This is then displayed on a display and the system returns to wait for the next intermediate signal. If there is a chord of gestures that are input, meaning two or more simultaneously, a mapping to a group of strokes or a whole character can be made. The mapped group is then displayed and the system returns to wait for the next intermediate signal. In each case, before returning the system performs an autocomplete check to determine if all the strokes entered so far correspond to a logographic character and if it does this is output as an associated encoding from an encoding set such as Unicode or CJK.

The mapping can be done in several ways but in this first example, where the character set is a Chinese character set, the mapping can be performed quite efficiently by observing the following rules about the strokes used to generate a Chinese character. As strokes are entered, the apparatus displays them onto a screen so a user can check they are correct, and once a sequence corresponding to a whole target completed logogram is displayed the user can enter an end command through the interface and the logogram is then identified from a database of logograms.

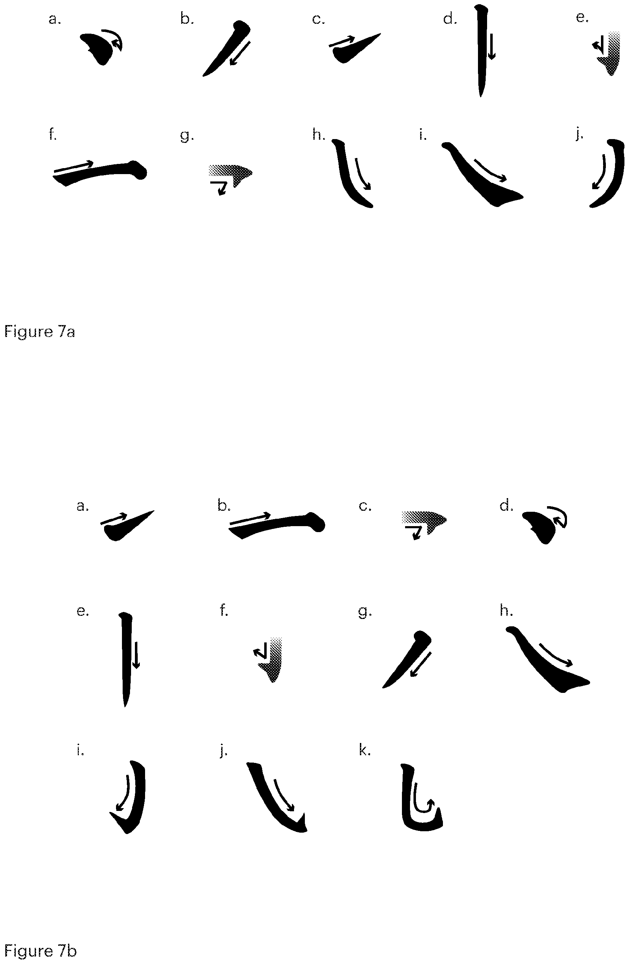

Firstly, the strokes can be grouped according to type as shown in Figure 7a:
a. "Dian" - dot
b. "Pie" - left throw
c. "Ti" - rise, jump
d. "Shu" - vertical stroke
e. "Shu gou" - vertical hook
f. "Heng" - horizontal stroke
g. "Heng gou" - horizontal hook
h. "Xie" - right curve
i. "Na" - right sweep
j. "Wan" - left curve

Other groupings of strokes are possible, such as the alternative shown in Figure 7b which has 11 strokes rather than the 10 of the first grouping set out above:
a. "Ti" - rise, jump
b. "Heng" - horizontal stroke
c. "Heng gou" - horizontal hook
d. "Dian" - dot
e. "Shu" - vertical stroke
f. "Shu gou" - vertical hook
g. "Pie" - left throw
h. "Na" - right sweep
i. "Wan gou" - left curve hook
j. "Xie gou" - right curve hook
k. "Shu wan gou" - vertical stroke, bend, hook;

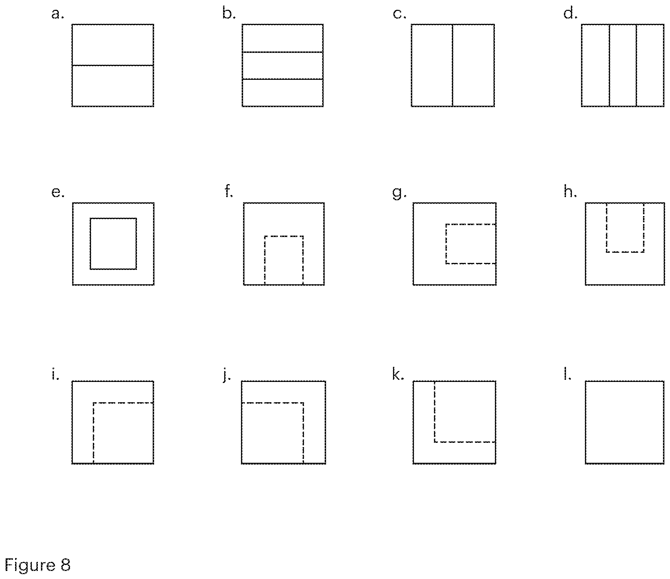

Next, the form of each character can be allocated to the following groups shown in Figure 8:
a. Upper/lower separation
b. Upper/middle/lower separation
c. Left/right separation
d. "Left/middle/right separation
e. Full enclosure
f. Upper three-sided enclosure
g. Left three-sided enclosure
h. Lower three-sided enclosure
i. Upper left corner enclosure
j. Upper right corner enclosure
k. Lower left corner enclosure
l. Whole

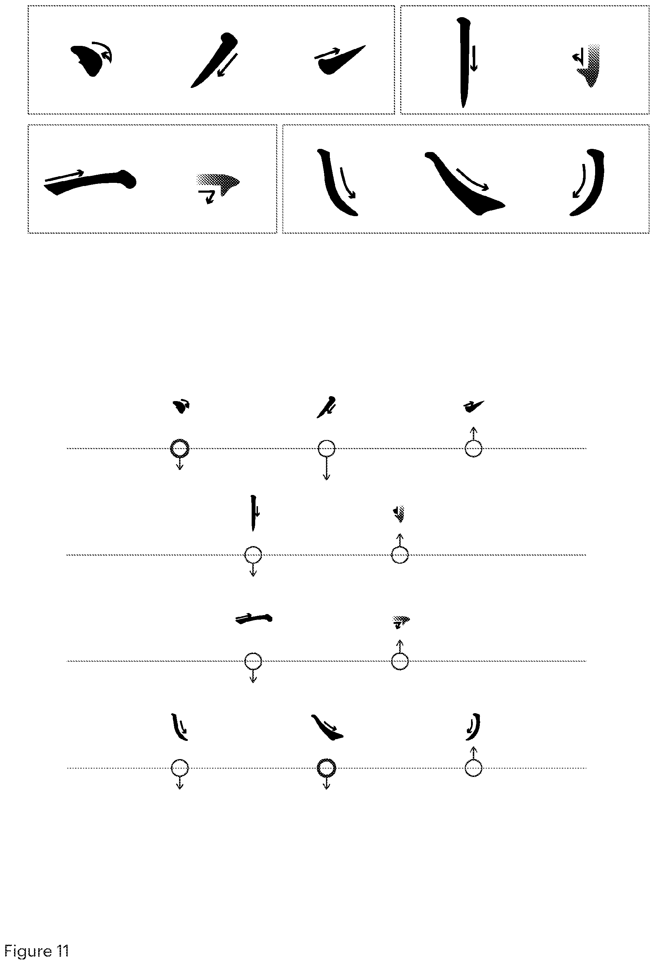

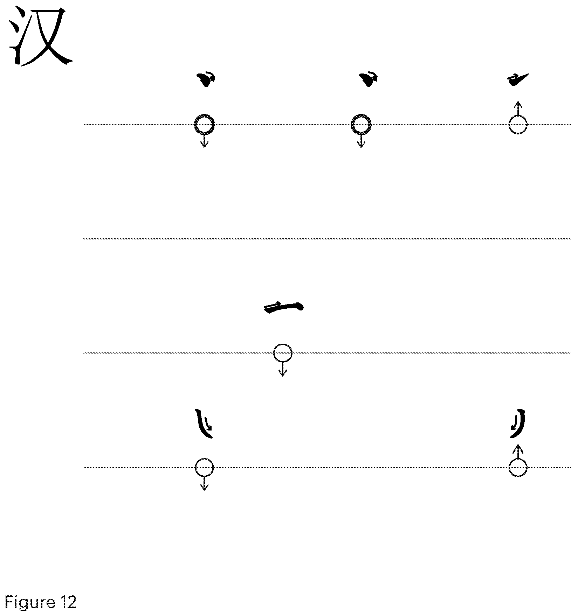

Figure 11 illustrates a first exemplary method of mapping that may be used by the processing circuit. Figures 12 to 14 illustrate a method of use of the apparatus to enter a Chinese character using that mapping.

Figure 12 shows the total sequence of gestures on the contact regions that can be made to write the character 'Han' as in Han Chinese using the mapping of Figure 11 and an interface of the type shown in Figure 3 with four strings.

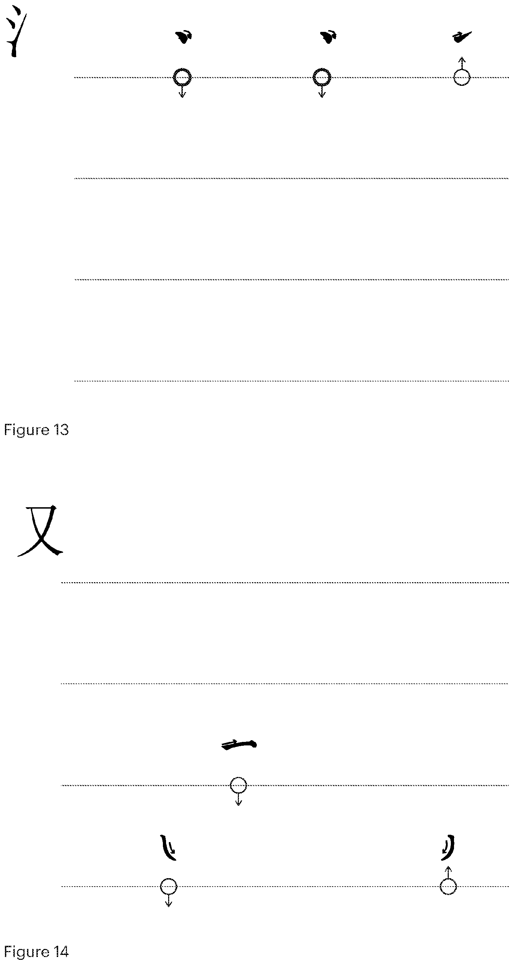

Figure 13 shows how a first 'chord' combination input for 3 strokes on the left side of 'Han' character can be made using the user input device of Figure 3, and Figure 14 shows how a second 'chord' combination input for 3 strokes on the right side of 'Han' character using the same mapping.

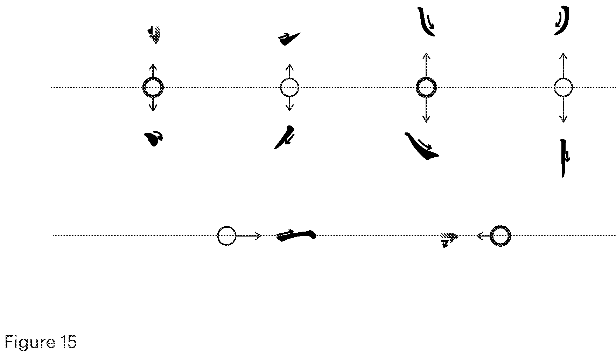

Figure 15 illustrates a second exemplary method of mapping that may be used separate from or in conjunction with the first exemplary mapping method, in which fundamental strokes are assigned to a unique property or combination of properties of a gesture independent of string or location. In addition, the identity of a specific contact region on which a gesture is made is used to identify a character composition.

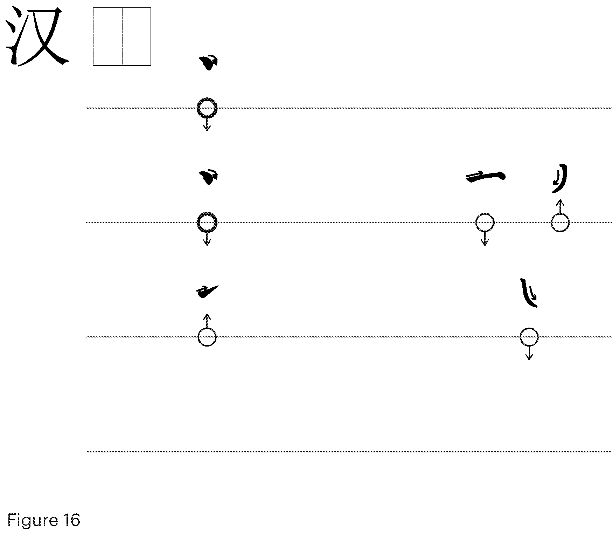

Figure 16 shows the total sequence of strokes to write the character 'Han' using this second mapping method. The character composition is left/right separation (see Figure 8).

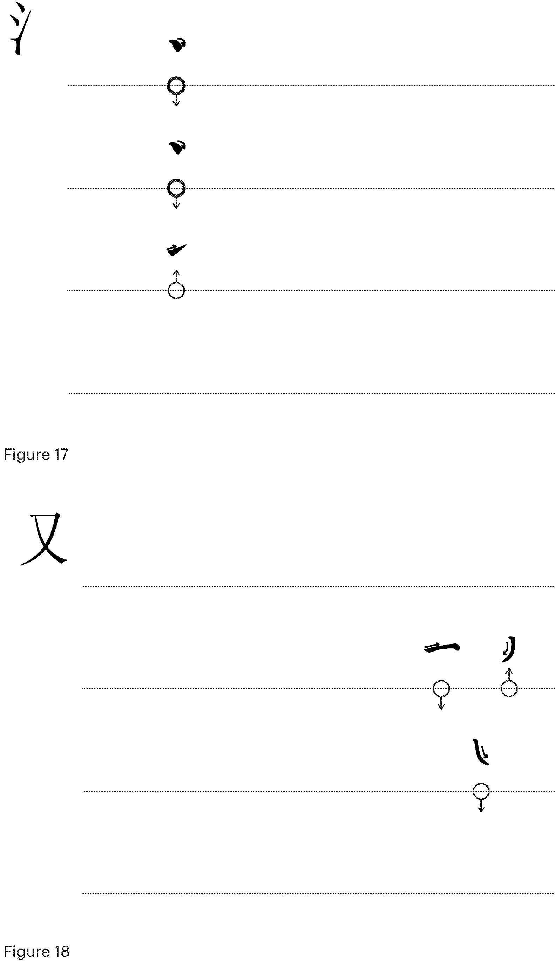

Figure 17 shows the first 'chord' combination input for 3 strokes on the left side of the 'Han' character using the second mapping method and Figure 18 shows a second 'chord' combination input for 3 strokes on the right side of 'Han' character using the second mapping method.

The skilled person will understand that the many alternative user input devices can be provided within the scope of this invention and configuration of user interfaces and processing circuits.

The first mapping of Figures 11 to 14 and the second mapping of Figure 15 to 18 can be combined within the same instance of input via the interface. The system can be made intuitive because input property/properties are linked to the physical act of writing a stroke. E.g., Upward gesture of a contact = upward physical pen stroke. 3 short plucks = 3 dotted radical (known as 3 'dian' or 'drops' of water in Chinese) and so on.

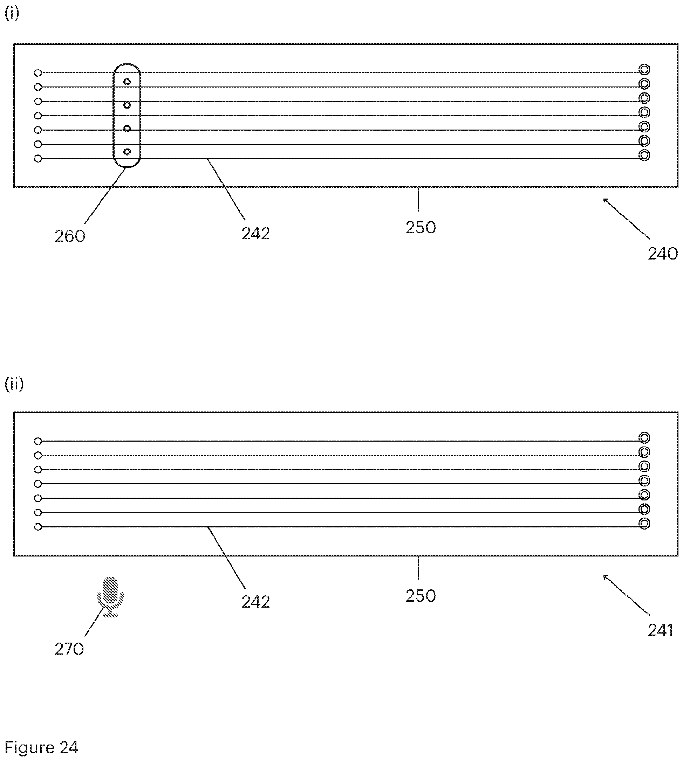

Figures 24(i) and (ii) show two still further alternative examples of user interfaces 240 and 241, in which the contact regions comprise continuous strings 242 that are held in tension over a base portion 250 in the manner of the strings of a guitar or other musical instrument, the user contacting the string generating a unique vibration of the string. In Figure 24(i) the interface includes a pickup 260 which detects the vibration and outputs an intermediate signal having a value that encodes the position of the contact and how the contact is made. In the interface of Figure 24(ii) a microphone 270 picks up the sounds made by the strings as they vibrate, the sounds being converted into intermediate values. The microphone removes the need for a pickup.

The strings 242 may be made of nylon or steel, and could be standard guitar strings which are widely available and easily fixed in tension.

With the provision of strings 242 a two-handed input method can be easily implemented, the user using one hand- perhaps their non-dominant hand, to hold the string to the upper surface of the base portion and the other hand plucking the string. By holding the string down the length that is plucked will vary, altering the frequency. This frequency and the change in frequency over time may be mapped to multiple stroke types.

The note may be used to identify a character composition, and the way in which the note is played (hard or soft, bending up or down) may denote the stroke type. Or this may be reversed. For example, a middle C tone could be assigned to one stroke type when played as a short note, and assigned to a different stroke if played as a long note. If the note is bent, by pushing the string, or the finger is slid along the string, this will create other sounds that can be assigned to other intermediate signal values for middle C, the same can be done for other notes that may be played. In this way each note will provide the functionality of a contact region.

Instead of identifying the note, the interface may simply determine which string is being played and the way the note is played to generate the intermediate signals and the values of those signals.

This can enable any stringed instrument that a user is familiar with and that can produce a predefined set of notes to be used together with a microphone as the interface.

### Mobile Phone Embodiment of System

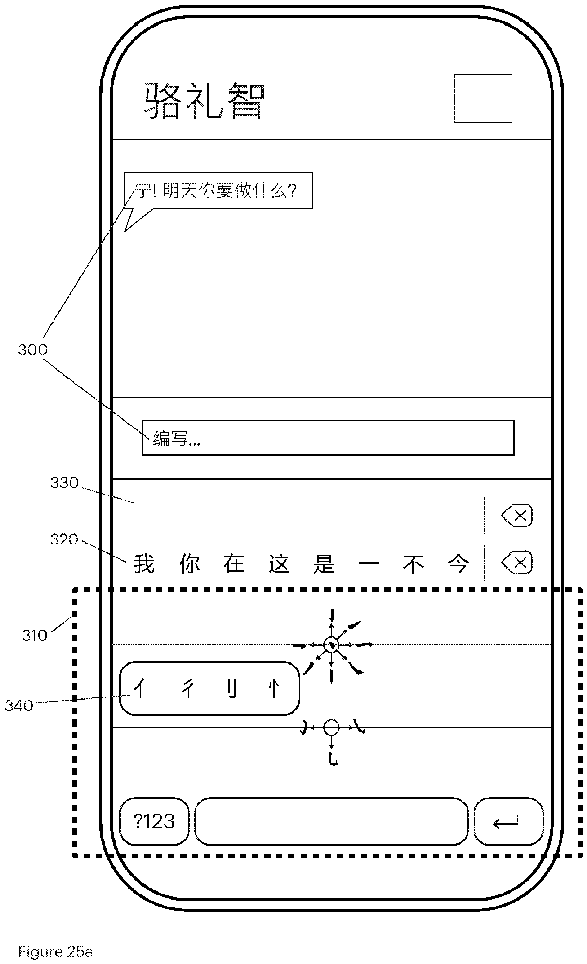

Figure 25a illustrates a system in accordance with the present invention that leverages the functionality of a smart phone for the hardware components, the phone being provided with a customised app stored within the phone's memory that causes the processing circuit of the smartphone to implement the required functionality by which a user can enter characters and by which they are displayed on the screen of the device.

The screen of the phone is touch sensitive, whereby a user can touch any part of the screen and the processing circuit receives a data signal that indicates the location, direction, time, and pressure of a user's touch. Touch screen technology is well known in the smart phone industry, and it is also well known to analyse the interactions of a user with a screen to detect when a contact is made.

The screen is divided up into several regions as described in Table 1 and as can be seen in Figure 25a.

**Table 1**

| Feature | Description | |
|---|---|---|
| Character display 300 | | - Located in upper half of screen |
| | | - Displays retrieved logographic characters, such as in an instant messaging conversation log |
| Gesture input region 310 | | - Located in lower half of screen |
| | | - Receives gestures |
| | | - Divided into 2 sets of horizontal contact regions (not visible to user) |
| | | - Each contact region has 1 horizontal line running across the middle (the 'string') |
| | | - Each line is labelled with the gesture direction and corresponding stroke output |
| | | - The lines serve as visual guides for both individual swipes and gesture shortcuts made in relation to the lines |
| | | - 'Space bar' at the base of the interface selects the first entry in the character suggestion list |
| Character suggestion list 320 | | - Displayed as a bar above the gesture input region |
| | | - Provides list of logographic character query results |
| | | - Updates after items are added or removed from the input history |
| | | - Users can tap on a logographic character to select it, it will then display in the 'character display' region. |
| | | - 'Backspace' button allows the user to delete the last logographic character selected for display |
| Input history 330 | | - Displayed as a bar above the character suggestion list |
| | | - Displays fundamental strokes, stroke combinations, and radicals in the order they are entered by the user |
| | | - 'Backspace' button allows the user to delete the last entry in the input history |
| Radical pop-up suggestion list 340 | | - Is triggered by prolonged contact with the gesture input region in the final position of a gesture shortcut |
| | | - Appears over the final position of the finger |
| | | - Contains a list of radical suggestions associated with the gesture made |
| | | - An item in the list is selected for entry by dragging and releasing the finger over the desired item |

The user can input logographic characters into the mobile phone through the interface shown in Figure 25a using the following methods in any combination:
a. Enter a single fundamental stroke by tapping or moving their finger across the respective contact region in the respective set and direction (up, down, left, right, diagonal up left, diagonal up right, diagonal down left, diagonal down right).
b. Enter a stroke combination of 2 or more fundamental strokes that are adjacent in a logographic character's stroke order, by moving one or more fingers across 2 or more respective contact regions, in the respective set and directions.
c. Enter a stroke combination of 2 or more instances of the same fundamental stroke that are adjacent in a logographic character's stroke order, by moving one or more fingers across the same respective contact region in the same respective set and direction.
d. Enter a radical, common stroke combination or common use logographic character using a `gesture shortcut'. The detection of gesture shortcuts is triggered when there is a change in direction in finger movement, the finger moves across 2 or more contact regions within any set of contact regions, or the contact time exceeds a certain threshold. A 'hold' function produces a list of further radical suggestions for entry. Here, prolonged contact with the gesture input region in the final position of a gesture triggers a pop-up list (340) of suggestions over the position of the finger. An item in the list is selected for entry by dragging and releasing the finger over the desired entry.

The processing circuit of the mobile phone, in addition to mapping user swipes or taps on the screen to fundamental strokes includes a program which analyses the sequence of strokes and uses the information to query a database of logographic characters that are stored in a memory of the device.

The procedure used to interrogate the database may consist of the following:
1. Receive a sequence of fundamental strokes, stroke combinations, and/or radicals.
2. Convert any stroke combinations or radicals within the inputted sequence to a list of fundamental strokes, so that the input history consists only of fundamental strokes.
3. Query the database using the input history and generate a list of logographic characters (character suggestion list 320) whose stroke order is most like the input history thus far.
4. The database is queried each time a new entry is added to or removed from the input history, and the character suggestion list 320 is continuously updated and displayed.
5. The last entry displayed in the input history 330 can be manually deleted by the user, using a 'backspace' button.
6. The input history 330 is cleared when the user selects a character from the suggestion list, or when the user has deleted all entries in the input history.

The applicant has appreciated that providing very narrow contact regions may present difficulties when a user is writing quickly and makes a horizontal stroke. This may be offset slightly from the touch sensitive sub-regions and not be recorded.

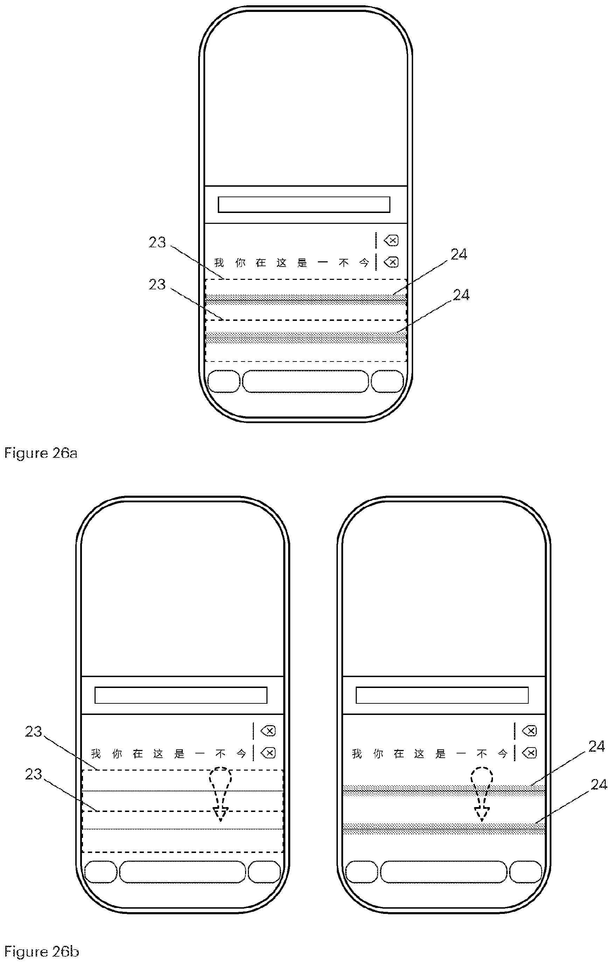

As exemplified in Figure 26a, to ameliorate this each contact region may be made up of two set of sub-regions 23 and 24, each sub-region being a touch sensitive pixel on a screen.

As shown in Figure 26b, when a gesture is not horizontal, it is beneficial to use a narrower set of contact regions, to identify which `string' more clearly was hit. If the same set of sensors was used for all gestures, then any non-horizontal gestures that are too close to the other string will be identified as hitting both strings (indicated in the scenario on the left). A narrower set of sensors allows the user more vertical space to 'swipe' across a string, without touching other strings (indicated in the scenario on the right).

Once the correct sub-set of regions is determined, the processing then proceeds in the same way it would if there was only one set of sub regions defined in the system.

An implementation of this arrangement of narrow and wide touch sensitive regions for each row in the mobile phone device shown in Figures 25a will now be described.

Figure 26a shows the 2 sets of contact regions, which are triggered depending on the direction of the gesture. Each comprises a row which is overlaid with a line on the screen to appear as a string. The two strings are offset vertically. Each contact region in each row of contact regions comprises two different subsets of touch sensitive sub-regions, where a first set comprises a sub-set of touch sensitive regions that define a row of contact regions which are touch sensitive over a wider region 23 each side of a central axis, and a second set that comprises a sub-set of touch sensitive regions that define a row which is touch sensitive over a narrower region 24 each side of a central axis, the central axes of both first and second sets being the same or substantially the same so that the narrower rows fit within the wider rows.

If the gesture is in a horizontal direction, the wider set of contact regions 23 are used to map the strokes. For all other gesture directions, the narrower set of contact regions 24 are used to map the strokes. Within either sets of contact regions, when the gesture changes direction, includes a hold at the end or touches another contact region, gesture shortcut mode is enabled.

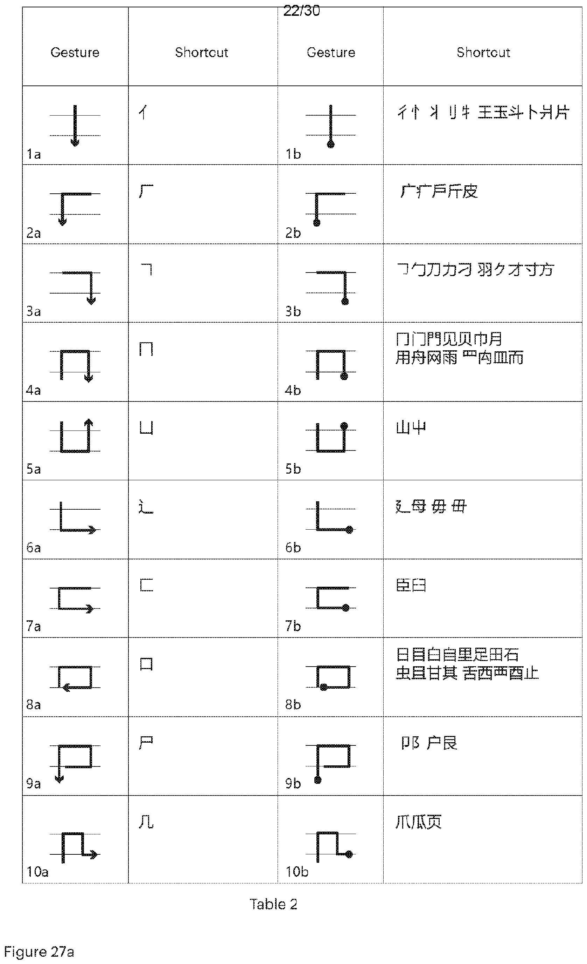

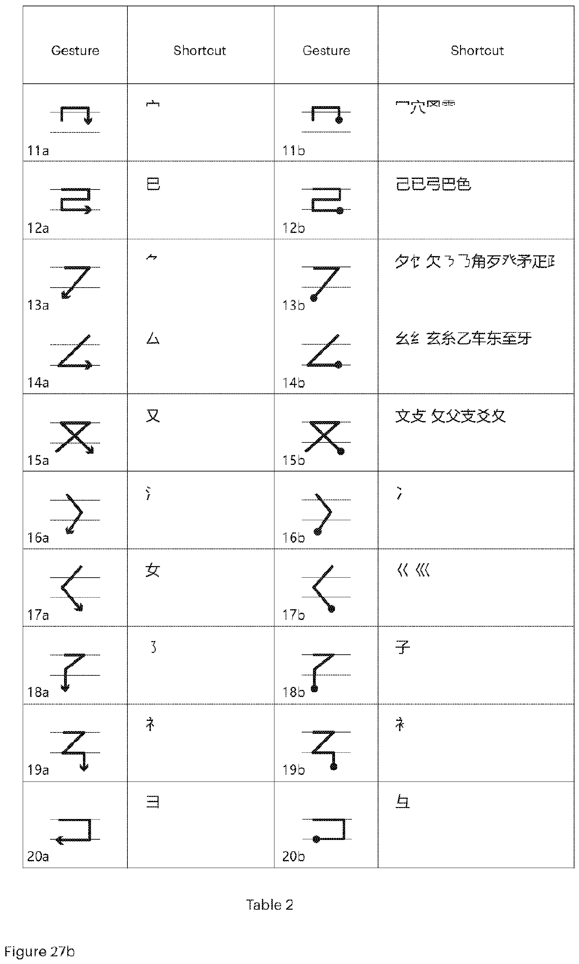

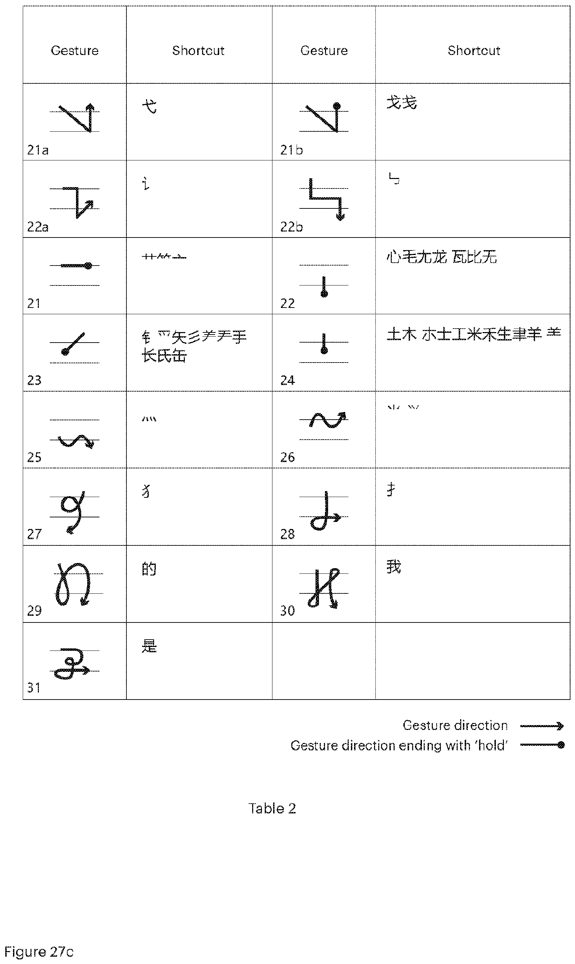

Figures 27a, 27b and 27c together form a table (Table 2) of `gesture shortcuts' that can be used to enter radicals, common stroke combinations or common use logograms. The horizontal lines act as a visual reference for the user and they provide guides for the position and shape of the different gestures.

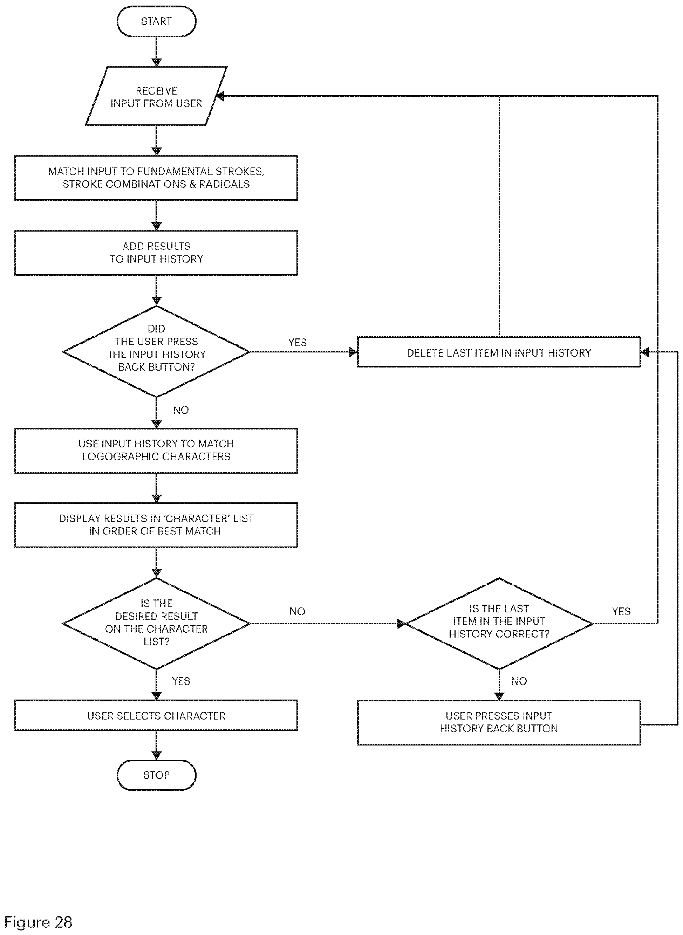

Figure 28 is a flow chart that illustrates the use in the system of an 'input history' list, where the user can manually delete the last entry.

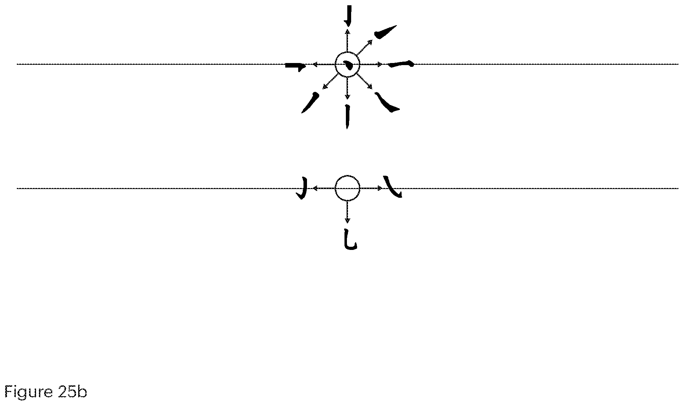

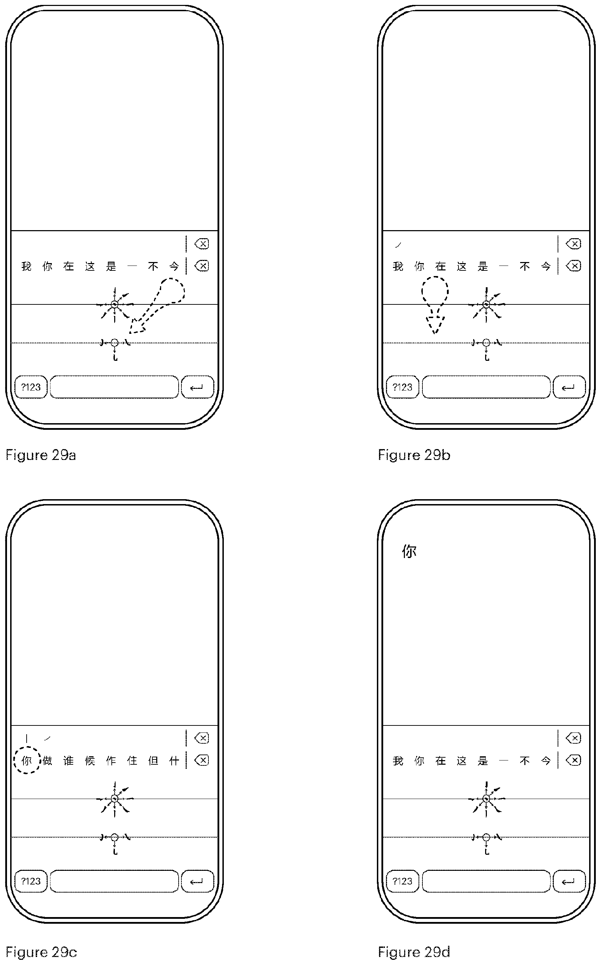

Figures 29a to 29d illustrate an example of the mapping in Figures 7b and 25b, where two individual strokes are used to enter the character ' 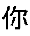 ' (Ni). In Figures 29a and 29b, the user enters the two strokes, before selecting from a list of suggestions in Figure 29c. The character chosen is then displayed in Figure 29d.

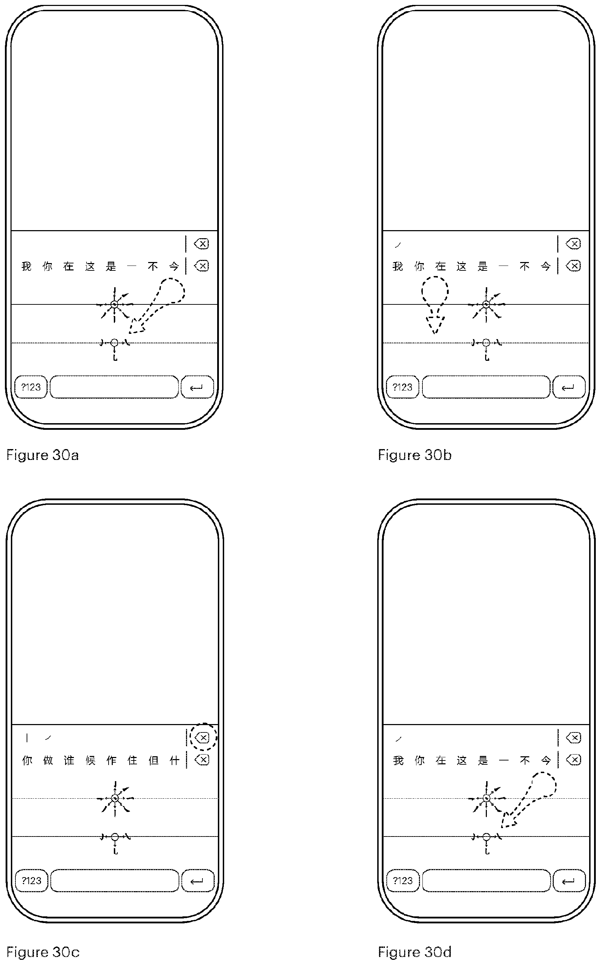

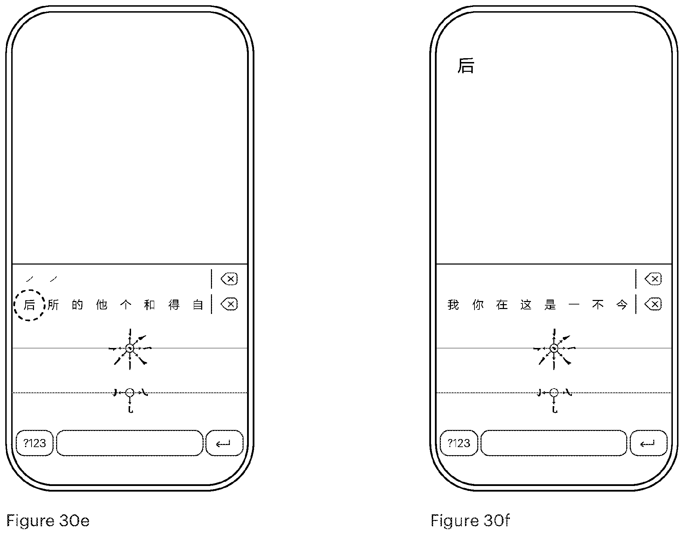

Figures 30a to 30f illustrate an example of the mapping in Figures 7b and 25b, where the user deletes one of the strokes in the input history, midway through entering a character. The user makes an error in stroke entry in Figure 30b. The stroke is then deleted from the input history in Figure 30c, and replaced with a different stroke entered in Figure 30d. The list of character suggestions updates accordingly in Figure 30e, and the user selects the correct character. The selected character is displayed in Figure 30f, '/B' (Hou).

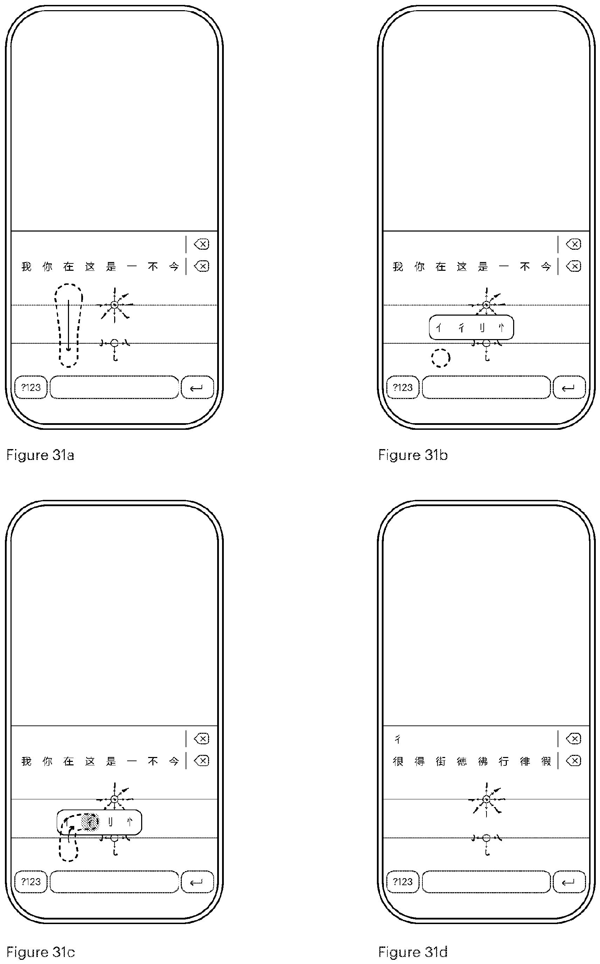

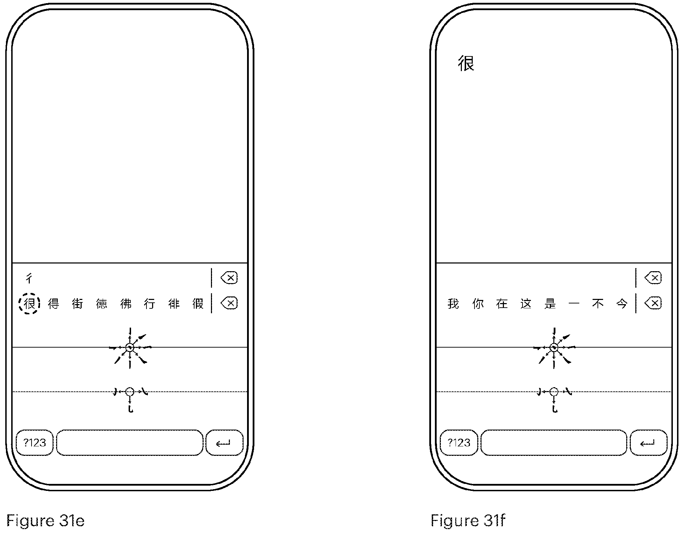

Figures 31a to 31f illustrate an example of the mapping in Figures 7b and 25b, and the use of gesture shortcut 1b in Figure 27a. The user makes a gesture shortcut in Figure 31a and holds their finger down in Figure 31b to trigger a pop-up menu of radical suggestions. The user then slides and releases their finger over the chosen radical in 31c to select the radical for entry. The selected radical is included in the input history in Figure 31d, and the character suggestion list updates accordingly. The user then selects the correct character, ' 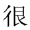 ' (Hen) in Figure 31e. Finally the character is displayed as shown in Figure 31f.

In summary, the smartphone-based system shown in Figures 25a to 31f can be considered to define the following core set of features and functionality:
a. Multiple contact regions arranged in rows. Each row of contact regions is associated with two sets of touch sensitive sub-regions so the row can be interpreted as a wide row or a narrow row, the two sharing a common axis. The invention may also apply to rows where the contact regions are associated with only the one set of narrow or wide regions but the two sets provide some benefits.
b. Virtual 'strings', visually indicated by lines, that run across the centre of each of the rows of contact regions.
c.. Vector analysis of the outputs from the sub-sets defining the wide and narrow rows is made and from this only one of the two contact regions is retained for further analysis and generation of an intermediate signal and the other discarded, dependent primarily on the direction of the gesture that has been made;
d.. An intermediate signal is generated from the vector analysis of the non-discarded contact region that encodes a set of properties, including the type of contact (tap versus swipe), the direction associated with movement across the contact region made by the finger or pointing device, the duration of contact, and the identity of the contact region or entire row that the finger interacted with.
e. A database is used to map a fundamental stroke, stroke combination, radical or complete logogram to each intermediate signal made in a temporal sequence.
f.. A database is used to map the fundamental stroke, stroke combination or radical to a set of characters, or a character encoding system such as Unicode.
g.. A display (input history) is provided and used to render a visual representation of each fundamental stroke, stroke combination or radical the user enters to build up a logogram.
h. A display is provided that is used to render a visual representation of a complete character or a list of suggested characters after each input instance.

### Glossary of Terms

Logogram- a written or pictorial symbol that represents a word or morpheme.
Logographic character- typically logograms used in writing systems, including but not limited to Chinese. In computing, they could also be parts of characters (such as radicals or CJK strokes) that can be displayed on a computer. These are assigned a unique code in an encoding system such as Unicode (the most common encoding system).
Fundamental stroke- the smallest component of a logogram. A unidirectional motion of continuous contact with a writing surface that produces a given part of a logogram. While there is no consensus on a single list of fundamental strokes, for the purposes and optimization of this invention, a set of 10 strokes and an alternative set of 11 strokes were identified.
Stroke combination- any sequence of strokes used to write a logographic character.
Stroke order- the total sequence of strokes needed to write a logographic character.
Radical- a stroke combination that forms a graphical component of a logogram, often an indicator of meaning or pronunciation. While some logograms can be visually broken down into more than one radical, they are officially listed under one radical in the Chinese dictionary. For example, the logogram ' 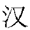 'can be broken down into the two radicals ' 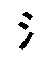 ' and ' 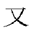 ', but is listed under the radical ` 5 ' in the dictionary. Regardless of this, the algorithm breaks down radicals and groups of strokes in the same way, so it is possible to simply enter a logogram according to its graphical components.
Calligraphic knowledge- knowledge of stroke type and stroke order needed to write a logogram by hand.
Pinyin- phonetic notation of Chinese logograms that uses the Roman alphabet, commonly used in China and amongst those who use simplified Chinese logograms.
Zhuyin- phonetic notation of Chinese logograms, commonly used in Taiwan amongst those who use traditional Chinese logograms.
Romanization- the notation of non-Roman writing systems using the Roman alphabet.

## Claims

1. A text entry apparatus (100) for entering characters of a logographic character set on an electronic device, the apparatus comprising:
a user interface (110) having a plurality of discrete contact regions (22), the interface being configured to generate an intermediate signal each time a user contacts a contact region with at least one finger or thumb or pointing device, the value of the intermediate signal being dependent on the type of contact made on the contact region and
a processing circuit (120) which is configured to receive a temporal sequence of intermediate signals and from the values of the intermediate signals in the sequence generate a corresponding temporal sequence of fundamental strokes in which each value of each intermediate signal is mapped to a fundamental stroke, each stroke defining a visual part of a character of the logographic character set;
**characterized in that**
the contact regions are grouped into one or more elongate rows or columns of contact regions with each row or column providing an elongate virtual string that the user can interact with; and
wherein each virtual string is responsive to contact from the user at any position along said virtual string.

2. A text entry apparatus according to claim 1, wherein the contact regions are grouped into two or more elongate rows or columns.

3. A text entry apparatus according to any preceding claim in which the user interface comprises a touch sensitive surface.

4. A text entry apparatus according to claim 1, claim 2, or claim 3 in which there are multiple contact regions in each row of sensing regions that abut adjacent regions in the row so that the whole to form a continuous elongate element that is responsive to a finger being dragged across the element at any position along its length; and/or
in which each row comprises a single elongate contact region that reaches from one end of the row to the other.

5. A text entry apparatus according to any one of claims 1 to 4 in which each row comprises two contact regions of different sizes, a first contact region comprising a first sub-set of touch sensitive regions that define a contact region that is touch sensitive over a wider region each side of a central axis of the row, and a second contact region comprising a second sub-set of touch sensitive regions that define a contact region that is touch sensitive over a narrower region each side of a central axis, the central axes of both first and second contact regions being the same or substantially the same so that the narrower rows fit within the wider rows.

6. A text entry apparatus according to any preceding claim in which the location of the rows is visible to a user by an elongate indicia that is displayed or physically incorporated into the user interface, the indicia aligned with a row of contact regions.

7. A text entry apparatus according to any preceding claim in which the processing circuit is configured such that a user contacting a contact region will generate an intermediate signal that identifies the contact region and one or more properties of the gesture that is used.

8. A text entry apparatus according to any preceding claim in which the interface is configured to assign a different value to an intermediate signal for one or more of the following types of gesture:
An up down gesture across a contact region;
A side-to-side gesture along a contact region orthogonal to the up down direction;
A diagonal gesture that crosses a contact region;
The pressure applied to the contact region;
The duration of the contact and
The speed of movement of the contact across or along the contact region.

9. A text entry apparatus according to any preceding claim in which the interface is configured to generate an intermediate signal that encodes at least one property of the movement across the contact region made by a finger where the intermediate signal uniquely identifies the contact region and the type of the movement, or where the intermediate signal uniquely identifies a row of contact regions and the type of movement.

10. A text entry apparatus according to any preceding claim in which the processing circuit:
(a) is configured to map a group of fundamental strokes to a combination of simultaneous intermediate signals in a sequence;
(b) is configured to map a single fundamental stroke to the property or combination of properties of each gesture represented by an intermediate signal in the temporal sequence; and/or
(c) is configured to map a character composition to a row or column of contact regions, or to specific contact regions of the user input device.

11. A text entry apparatus according to any preceding claim which includes a display (130) which is configured to render a visual representation of each fundamental stroke in a temporal sequence to build up a logogram.

12. A text entry apparatus according to claim 10, wherein the display comprises a display of a smartphone or tablet or other device and in which the rows are offset from each other and extend from one side of the user interface of the apparatus to the other.

13. A method for entering a character of a logographic character set into an electronic device, the method comprising the steps of:
using a finger or thumb or pointing device to make a gesture on a contact region of a user interface, the interface having a plurality of discrete contact regions grouped into one or more elongate rows or columns of contact regions with each row or column providing an elongate virtual string that the user can interact with;
generating an intermediate signal each time a user contacts a contact region with at least one finger or thumb or pointing device, the value of the intermediate signal being dependent on the type of contact made by the finger or thumb on the contact region, and wherein the same intermediate signal is generated for same type of contact anywhere along a row or column;
receiving a temporal sequence of intermediate signals and from the values of the intermediate signals in the sequence generating a corresponding temporal sequence of fundamental strokes or groups of fundamental strokes in which each value of each intermediate signal is mapped to a fundamental stroke, each fundamental stroke being a part of the characters of the logographic character set.

14. The method of claim 13 further comprising, on a user entering an end command, mapping the inputted as set of fundamental strokes to a logographic character and outputting a corresponding code of a character encoding system.

15. The method of claim 13 or claim 14, wherein the contact regions are grouped into two or more elongate rows or columns.

## Patentansprüche

1. Texteingabevorrichtung (100) zur Eingabe von Zeichen eines logographischen Zeichensatzes auf einer elektronischen Vorrichtung, wobei die Vorrichtung umfasst:
eine Benutzerschnittstelle (110), die eine Vielzahl von diskreten Kontaktbereichen (22) aufweist, wobei die Schnittstelle so konfiguriert ist, dass sie jedes Mal, wenn ein Benutzer mit einem Kontaktbereich mit mindestens einem Finger oder Daumen oder einer Zeigevorrichtung in Kontakt kommt, ein Zwischensignal erzeugt, wobei der Wert des Zwischensignals von der Art des auf dem Kontaktbereich ausgeführten Kontakts abhängt, und
eine Verarbeitungsschaltung (120), die so konfiguriert ist, dass sie eine zeitliche Folge von Zwischensignalen empfängt und aus den Werten der Zwischensignale in der Folge eine entsprechende zeitliche Folge von Grundstrichen erzeugt, in der jeder Wert jedes Zwischensignals auf einen Grundstrich abgebildet ist, wobei jeder Strich einen visuellen Teil eines Zeichens des logographischen Zeichensatzes definiert;
**dadurch gekennzeichnet, dass**
die Kontaktbereiche in eine oder mehrere längliche Reihen oder Spalten von Kontaktbereichen gruppiert sind, wobei jede Reihe oder Spalte eine längliche virtuelle Zeichenkette bereitstellt, mit der der Benutzer interagieren kann; und
wobei jede virtuelle Zeichenkette auf den Kontakt durch den Benutzer an einer beliebigen Position entlang der virtuellen Zeichenkette reagiert.

2. Texteingabevorrichtung nach Anspruch 1, wobei die Kontaktbereiche in zwei oder mehr längliche Reihen oder Spalten gruppiert sind.

3. Texteingabevorrichtung nach einem vorstehenden Anspruch, bei der die Benutzerschnittstelle eine berührungsempfindliche Oberfläche umfasst.

4. Texteingabevorrichtung nach Anspruch 1, Anspruch 2, oder Anspruch 3, bei der mehrere Kontaktbereiche in jeder Reihe von Sensorbereichen vorhanden sind, die an benachbarte Bereiche in der Reihe angrenzen, so dass das Ganze ein durchgehendes längliches Element bildet, das auf das Ziehen eines Fingers über das Element an einer beliebigen Position entlang seiner Länge reagiert; und/oder
bei der jede Reihe einen einzigen länglichen Kontaktbereich umfasst, der von einem Ende der Reihe zu dem anderen reicht.

5. Texteingabevorrichtung nach einem der Ansprüche 1 bis 4, bei der jede Reihe zwei Kontaktbereiche unterschiedlicher Größe umfasst, wobei ein erster Kontaktbereich eine erste Untergruppe berührungsempfindlicher Bereiche umfasst, die einen Kontaktbereich definieren, der über einen breiteren Bereich auf jeder Seite einer Mittelachse der Reihe berührungsempfindlich ist, und ein zweiter Kontaktbereich eine zweite Untergruppe berührungsempfindlicher Bereiche umfasst, die einen Kontaktbereich definieren, der über einen schmaleren Bereich auf jeder Seite einer Mittelachse berührungsempfindlich ist, wobei die Mittelachsen sowohl des ersten als auch des zweiten Kontaktbereichs gleich oder im Wesentlichen gleich sind, so dass die schmaleren Reihen in die breiteren Reihen passen.

6. Texteingabevorrichtung nach einem vorstehenden Anspruch, bei der die Stelle der Reihen für einen Benutzer durch eine längliche Angabe sichtbar ist, die angezeigt oder physisch in die Benutzerschnittstelle integriert ist, wobei die Angabe mit einer Reihe von Kontaktbereichen ausgerichtet ist.

7. Texteingabevorrichtung nach einem vorstehenden Anspruch, bei der die Verarbeitungsschaltung so konfiguriert ist, dass ein Benutzer, der mit einem Kontaktbereich in Kontakt kommt, ein Zwischensignal erzeugt, das den Kontaktbereich und eine oder mehrere Eigenschaften der verwendeten Geste identifiziert.

8. Texteingabevorrichtung nach einem vorstehenden Anspruch, bei der die Schnittstelle so konfiguriert ist, dass sie einem Zwischensignal für eine oder mehrere der folgenden Arten von Gesten einen unterschiedlichen Wert zuweist:
Eine Auf-Ab-Geste über einen Kontaktbereich;
Eine Seite-zu-Seite-Geste entlang eines Kontaktbereichs orthogonal zu der Auf-AbRichtung;
Eine diagonale Geste, die einen Kontaktbereich kreuzt;
Der Druck, der auf den Kontaktbereich ausgeübt wird;
Die Dauer des Kontakts und
Die Geschwindigkeit der Bewegung des Kontakts über oder entlang des Kontaktbereichs.

9. Texteingabevorrichtung nach einem vorstehenden Anspruch, bei der die Schnittstelle so konfiguriert ist, dass sie ein Zwischensignal erzeugt, das mindestens eine Eigenschaft der von einem Finger über den Kontaktbereich ausgeführten Bewegung kodiert, wobei das Zwischensignal den Kontaktbereich und die Art der Bewegung eindeutig identifiziert, oder wobei das Zwischensignal eine Reihe von Kontaktbereichen und die Art der Bewegung eindeutig identifiziert.

10. Texteingabevorrichtung nach einem vorstehenden Anspruch, bei der die Verarbeitungsschaltung:
(a) so konfiguriert ist, dass sie eine Gruppe von Grundstrichen auf eine Kombination von gleichzeitigen Zwischensignalen in einer Folge abbildet;
(b) so konfiguriert ist, dass sie einen einzigen Grundstrich auf die Eigenschaft oder Kombination von Eigenschaften jeder Geste abbildet, die durch ein Zwischensignal in der zeitlichen Folge dargestellt wird; und/oder
(c) so konfiguriert ist, dass sie eine Zeichenkomposition auf eine Reihe oder Spalte von Kontaktbereichen oder auf spezifische Kontaktbereiche der Benutzereingabevorrichtung abbildet.

11. Texteingabevorrichtung nach einem vorstehenden Anspruch, die eine Anzeige (130) einschließt, die so konfiguriert ist, dass sie eine visuelle Darstellung jedes Grundstrichs in einer zeitlichen Folge wiedergibt, um ein Logogramm aufzubauen.

12. Texteingabevorrichtung nach Anspruch 10, wobei die Anzeige eine Anzeige eines Smartphones oder Tablets oder einer anderen Vorrichtung umfasst und bei der die Reihen zueinander versetzt sind und sich von einer Seite der Benutzerschnittstelle der Vorrichtung zu der anderen erstrecken.

13. Verfahren zur Eingabe eines Zeichens eines logographischen Zeichensatzes in eine elektronische Vorrichtung, wobei das Verfahren die Schritte umfasst zum:
Verwenden eines Fingers oder eines Daumens oder einer Zeigevorrichtung, um eine Geste auf einem Kontaktbereich einer Benutzerschnittstelle auszuführen, wobei die Schnittstelle eine Vielzahl von diskreten Kontaktbereichen aufweist, die in eine oder mehrere längliche Reihen oder Spalten von Kontaktbereichen gruppiert sind, wobei jede Reihe oder Spalte eine längliche virtuelle Zeichenkette bereitstellt, mit der der Benutzer interagieren kann;
Erzeugen eines Zwischensignals jedes Mal, wenn ein Benutzer mit einem Kontaktbereich mit mindestens einem Finger oder Daumen oder einer Zeigevorrichtung in Kontakt kommt, wobei der Wert des Zwischensignals von der Art des Kontakts abhängt, der von dem Finger oder Daumen auf dem Kontaktbereich ausgeführt wird, und wobei das gleiche Zwischensignal für die gleiche Art des Kontakts überall entlang einer Reihe oder Spalte erzeugt wird;
Empfangen einer zeitlichen Folge von Zwischensignalen und Erzeugen einer entsprechenden zeitlichen Folge von Grundstrichen oder Gruppen von Grundstrichen aus den Werten der Zwischensignale in der Folge, wobei jeder Wert jedes Zwischensignals auf einen Grundstrich abgebildet wird und jeder Grundstrich ein Teil der Zeichen des logographischen Zeichensatzes ist.

14. Verfahren nach Anspruch 13 weiter umfassend, wenn ein Benutzer einen Endbefehl eingibt, das Abbilden des eingegebenen Satzes von Grundstrichen auf ein logographisches Zeichen und das Ausgeben eines entsprechenden Codes eines Zeichenkodierungssystems.

15. Verfahren nach Anspruch 13 oder Anspruch 14, wobei die Kontaktbereiche in zwei oder mehr längliche Reihen oder Spalten gruppiert sind.

## Revendications

1. Appareil (100) d'entrée de texte pour entrer des caractères d'un ensemble de caractères logographiques sur un dispositif électronique, l'appareil comprenant :
une interface utilisateur (110) présentant une pluralité de régions (22) de contact séparées, l'interface étant configurée pour générer un signal intermédiaire à chaque fois qu'un utilisateur entre en contact avec une région de contact avec au moins un doigt ou pouce ou dispositif de pointage, la valeur du signal intermédiaire étant dépendante du type de contact réalisé sur la région de contact et
un circuit (120) de traitement qui est configuré pour recevoir une séquence temporelle de signaux intermédiaires et à partir des valeurs des signaux intermédiaires dans la séquence, générer une séquence temporelle correspondante de segments fondamentaux dans laquelle chaque valeur de chaque signal intermédiaire est mappée à un segment fondamental, chaque segment définissant une partie visuelle d'un caractère de l'ensemble de caractères logographiques ;
**caractérisé en ce que**
les régions de contact sont groupées en une ou plusieurs rangées ou colonnes allongées de régions de contact, chaque rangée ou colonne fournissant une corde virtuelle allongée avec laquelle l'utilisateur est apte à interagir ; et
dans lequel chaque corde virtuelle est sensible au contact de l'utilisateur à n'importe quelle position le long de ladite corde virtuelle.

2. Appareil d'entrée de texte selon la revendication 1, dans lequel les régions de contact sont groupées en deux rangées ou colonnes allongées ou plus.

3. Appareil d'entrée de texte selon une quelconque revendication précédente dans lequel l'interface utilisateur comprend une surface tactile.

4. Appareil d'entrée de texte selon la revendication 1, la revendication 2 ou la revendication 3 dans lequel il existe de multiples régions de contact dans chaque rangée de régions de détection qui viennent en butée contre des régions adjacentes dans la rangée de telle sorte que l'ensemble forme un élément allongé continu qui est sensible à un doigt qui est glissé à travers l'élément à n'importe quelle position le long de sa longueur ; et/ou
dans lequel chaque rangée comprend une seule région de contact allongée qui s'étend d'une extrémité de la rangée à l'autre.

5. Appareil d'entrée de texte selon l'une quelconque des revendications 1 à 4 dans lequel chaque rangée comprend deux régions de contact de différentes tailles, une première région de contact comprenant un premier sous-ensemble de régions tactiles qui définissent une région de contact qui est tactile sur une région plus large de chaque côté d'un axe central de la rangée, et une deuxième région de contact comprenant un deuxième sous-ensemble de régions tactiles qui définissent une région de contact qui est tactile sur une région plus étroite de chaque côté d'un axe central, les axes centraux des première et deuxième régions de contact étant identiques ou sensiblement identiques de telle sorte que les rangées plus étroites s'ajustent à l'intérieur des rangées plus larges.

6. Appareil d'entrée de texte selon une quelconque revendication précédente dans lequel l'emplacement des rangées est visible pour un utilisateur par un repère allongé qui est affiché ou physiquement incorporé dans l'interface utilisateur, le repère étant aligné avec une rangée de régions de contact.

7. Appareil d'entrée de texte selon une quelconque revendication précédente dans lequel le circuit de traitement est configuré de telle sorte qu'un utilisateur en contact avec une région de contact génère un signal intermédiaire qui identifie la région de contact et une ou plusieurs propriétés du geste qui est utilisé.

8. Appareil d'entrée de texte selon une quelconque revendication précédente dans lequel l'interface est configurée pour attribuer une valeur différente à un signal intermédiaire pour un ou plusieurs des types de geste suivants :
un geste de haut en bas à travers une région de contact ;
un geste d'un côté à l'autre le long d'une région de contact orthogonale à la direction haut-bas ;
un geste diagonal qui croise une région de contact ;
la pression appliquée à la région de contact ;
la durée du contact et
la vitesse de déplacement du contact à travers ou le long de la région de contact.

9. Appareil d'entrée de texte selon une quelconque revendication précédente dans lequel l'interface est configurée pour générer un signal intermédiaire qui code au moins une propriété du déplacement à travers la région de contact effectué par un doigt, où le signal intermédiaire identifie de manière unique la région de contact et le type du déplacement, ou où le signal intermédiaire identifie de manière unique une rangée de régions de contact et le type de déplacement.

10. Appareil d'entrée de texte selon une quelconque revendication précédente dans lequel le circuit de traitement :
(a) est configuré pour mapper un groupe de segments fondamentaux à une combinaison de signaux intermédiaires simultanés dans une séquence ;
(b) est configuré pour mapper un segment fondamental unique à la propriété ou à une combinaison de propriétés de chaque geste représenté par un signal intermédiaire dans la séquence temporelle ; et/ou
(c) est configuré pour mapper une composition de caractères sur une rangée ou une colonne de régions de contact, ou sur des régions de contact spécifiques du dispositif d'entrée d'utilisateur.

11. Appareil d'entrée de texte selon une quelconque revendication précédente qui inclut une unité (130) d'affichage qui est configurée pour effectuer le rendu d'une représentation visuelle de chaque segment fondamental dans une séquence temporelle pour construire un logogramme.

12. Appareil d'entrée de texte selon la revendication 10, dans lequel l'unité d'affichage comprend une unité d'affichage d'un téléphone intelligent, d'une tablette ou d'un autre dispositif et dans lequel les rangées sont décalées les unes par rapport aux autres et s'étendent d'un côté de l'interface utilisateur de l'appareil à l'autre.

13. Procédé d'entrée d'un caractère d'un ensemble de caractères logographiques dans un dispositif électronique, le procédé comprenant les étapes suivantes :
utiliser un doigt, pouce ou dispositif de pointage pour effectuer un geste sur une région de contact d'une interface utilisateur, l'interface présentant une pluralité de régions de contact séparées groupées en une ou plusieurs rangées ou colonnes allongées de régions de contact, chaque rangée ou colonne fournissant une corde virtuelle allongée avec laquelle l'utilisateur est apte à interagir ;
générer un signal intermédiaire à chaque fois qu'un utilisateur entre en contact avec une région de contact avec au moins un doigt, ou pouce ou dispositif de pointage, la valeur du signal intermédiaire étant dépendante du type de contact réalisé par le doigt ou pouce sur la région de contact, et dans lequel le même signal intermédiaire est généré pour le même type de contact n'importe où le long d'une rangée ou colonne ;
recevoir une séquence temporelle de signaux intermédiaires et à partir des valeurs des signaux intermédiaires dans la séquence, générer une séquence temporelle correspondante de segments fondamentaux ou de groupes de segments fondamentaux dans laquelle chaque valeur de chaque signal intermédiaire est mappée à un segment fondamental, chaque segment fondamental étant une partie des caractères de l'ensemble de caractères logographiques.

14. Procédé selon la revendication 13 comprenant en outre, lorsqu'un utilisateur entre une instruction de fin, le mappage de l'entrée en tant qu'ensemble de segments fondamentaux à un caractère logographique et l'émission en sortie d'un code correspondant d'un système de codage de caractères.

15. Procédé selon la revendication 13 ou la revendication 14, dans lequel les régions de contact sont groupées en deux rangées ou colonnes allongées ou plus.
